# EUROPEAN PATENT SPECIFICATION

(11) **EP 1 636 787 B1**
(45) Date of publication and mention of the grant of the patent: **29.02.2012**
(21) Application number: 03734262.3
(22) Date of filing: 30.05.2003
(51) Int. Cl.: G06T 15/80

(54) **SHADING COMPUTER-GENERATED OBJECTS USING GENERALIZED SHADING REGIONS**
DUNKELTÖNEN VON COMPUTERGENERIERTEN OBJEKTEN MITTELS VERALLGEMEINERTER DUNKELTÖNUNGSBEREICHE
OMBRAGE D'OBJETS CREES PAR ORDINATEUR A L'AIDE DE ZONES D'OMBRAGE GENERALISEES

(43) Date of publication of application: 22.03.2006
(73) Proprietor: Pacific Data Images LLC, Glendale, CA 91201 (US)
(72) Inventor: SCHMIDT, Karl, Johann, San Francisco, CA 94133 (US)
(74) Representative: Goddar, Heinz J.
(86) International application number: PCT/US2003/016957
(87) International publication number: WO 2004/109651

(56) References cited:
- US-A- 5 936 633
- US-B1- 6 407 736
- LEE A ET AL: "DISPLACED SUBDIVISION SURFACES" PROCEEDINGS OF THE 27TH ANNUAL CONFERENCE ON COMPUTER GRAPHICS AND INTERACTIVE TECHNIQUES, 23 July 2000 (2000-07-23), - 28 July 2000 (2000-07-28) pages 85-94, XP001003544 NEW ORLEANS, LA, US ISBN: 978-1-58113-208-3
- GUMHOLD S ET AL: "MULTIRESOLUTION RENDERING WITH DISPLACEMENT MAPPING" PROCEEDINGS OF THE ACM SIGGRAPH/EUROGRAPHICS WORKSHOP ON GRAPHICS HARDWARE, 8 August 1999 (1999-08-08), - 9 August 1999 (1999-08-09) pages 55-66,141, XP000977112 LOS ANGELES, CA, US ISBN: 978-1-58113-170-3
- COOK R L ET AL: "THE REYES IMAGE RENDERING ARCHITECTURE" COMPUTER GRAPHICS, vol. 21, no. 4, 1 July 1987 (1987-07-01), pages 95-102, XP000561437 ACM, US ISSN: 0097-8930
- FOLEY J. ET AL: "COMPUTER GRAPHICS: PRINCIPLES AND PRACTICE (SECOND EDITION IN C)" 1 January 1996 (1996-01-01), ADDISON-WESLEY , BOSTON, US , XP002527605 ISBN: 978-0-321-21056-2 *pages 810-813*
- 'Method for replacing vertex normals caused by degenerate surface representation in a computer graphics system' IBM TECHNICAL DISCLOSURE BULLETIN vol. 33, no. 10B, March 1991, pages 365 - 368, XP000110196

## Description

### Background of the Invention

### Field of the Invention

The present invention relates generally to computer-generated graphics, and more particularly to shading techniques for assigning colors to regions of objects.

### Description of the Background Art

In computer graphics generation, the process of determining color values for regions of a graphic object is referred to as "shading." Many different techniques for shading are well known in the art; see, for example, J. Foley et al., Computer Graphics: Principles and Practice, 2d ed. (1995), pp. 734-41. Typically, software for creating computer graphic images includes a renderer, for determining color values of pixels in the generated image, and a shader that performs shading operations for a computer-generated object. The shader uses any or all of an object definition, texture map, lighting and shadow parameters, and the like to generate a shaded object. The shader may use well known interpolation techniques, such as Gouraud or Phong shading, in order to determine color values for application to the graphic object.

The task of a renderer is to determine a color value for each pixel of a graphic image. In determining a color value for a pixel, the renderer determines what portion of an object lies at that pixel location, and calls a shader to apply relevant shading algorithms to combine object surface features, textures, lighting, and the like, to generate a color value for a shading region for the pixel. The renderer then applies the color value to the pixel.

One undesirable aspect of many conventional shading techniques is the presence of artifacts such as Moiré patterns, jagged edges, noise, and/ or flickering. Such artifacts can be reduced somewhat by the conventional technique of antialiasing. Rather than computing colors at a single, arbitrarily small point within a pixel, antialiasing techniques involve estimating an average color at many points or across small regions of an object.. Conventionally, this is accomplished by dividing, or tessellating, the object surface into a grid of small polygons having rectangular shape, referred to herein as micropolygons or shading regions. Shading regions are typically approximately the size of pixels, and are conventionally represented as a rectangle of given width and height. See, for example, R.L. Cook, L. Carpenter, E. Catmull, "The Reyes Image Rendering Architecture," in Computer Graphics, Vol. 21, No. 4 (July 1987), pp. 95-102, and A. A. Apodaca, L. Gritz, "Advanced RenderMan," (Morgan Kaufmann, 2000), pp. 136-43.

Once the object has been tessellated, the renderer passes the shading regions to a shader. The shader assigns colors to the regions of the image corresponding to the shading regions. Conventionally, such shading regions are passed to the shader via an interface, wherein each shading region is specified by a coordinate location and a size. Conventional systems do not generally provide the ability to pass, to a shader, an accurate description of an arbitrarily shaped nonrectangular shading region. These limitations cause prior art shaders to produce inaccurate and substandard results for certain types of complex objects.

Some prior art systems perform shading based on a single point for each shading region, such as the center of the shading region. Other systems determine shading over a rectangular or ellipsoidal surface constructed around, or approximated by, the shading region. Examples of such prior art techniques are described below.

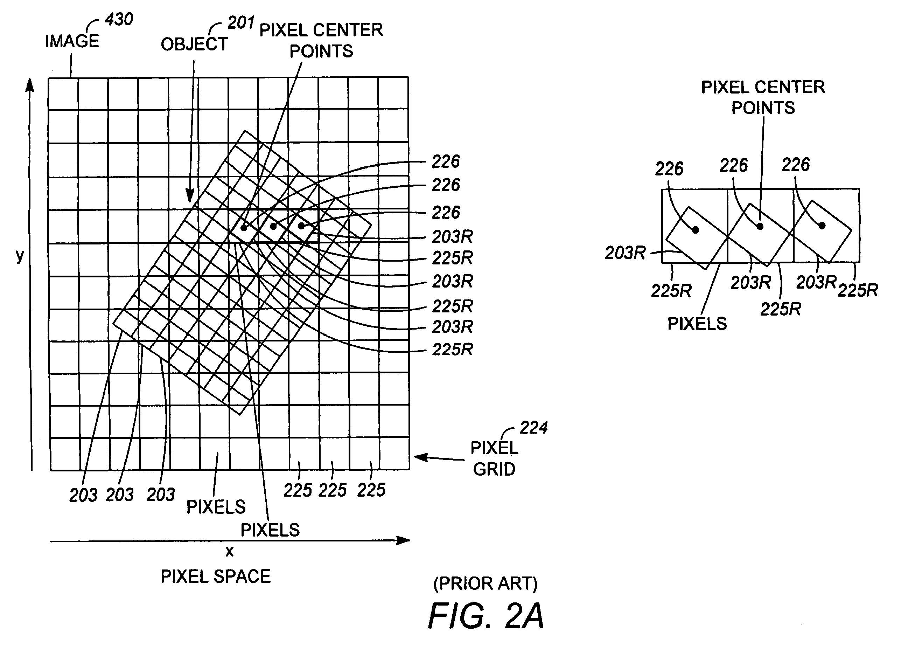

Referring now to Fig. 2A, there is shown a shading and rendering technique according to the prior art, as applied to image 430. Object 201 is tessellated into rectangular shading regions 203 forming a grid, and is shown overlaid on pixel grid 224 in pixel space. Superimposing the shading region grid on pixel grid 224 yields a correspondence between pixel 225 locations and shading regions 203; specifically, each pixel 225 location that lies within the bounds of object 201 corresponds to at least one shading region 203. The shader determines a color for each shading region 203 by retrieving, averaging, or accumulating the appropriate color or colors for the point or region represented by the shading region 203. The renderer then applies shading region 203 colors to pixels 225 overlaying or proximate to shading region 205.

In some systems, only the center point 226 of each pixel 225 is considered. As depicted in Fig. 2A, the renderer determines colors as follows: for each pixel 225 to be shaded, the system determines which shading region 203 overlaps the center point 226 of that pixel 225. The pixel 225 is assigned a color based on the color of whichever shading region overlays the center point 226. The example of Fig. 2A shows center points 226 for three pixels 225R. Three shading regions 203R overlay the center points 226 of these three pixels 225R, respectively. Thus, according to one prior art method, color values for these shading regions 203R would be applied to pixels 225R of the final image. However, the use of a single point for each pixel location in this manner can lead to undesirable artifacts such as color discontinuities, aliasing, and Moiré patterns.

In other prior art systems, pixels 225 are considered to have dimensions, so that the area covered by a pixel 225 can include portions associated with more than one shading region 203. Thus, a pixel 225 is assigned a color or colors based on the color or colors of one or more shading regions 203 that overlay (or are adjacent to) the pixel 225 given its actual or assumed dimensions.

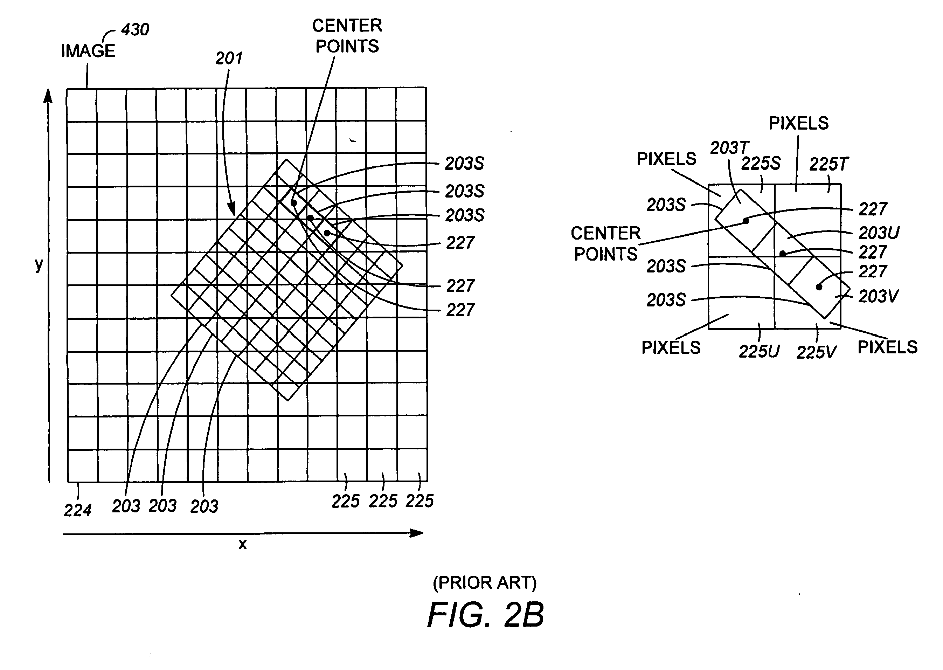

Examples of such prior art systems are depicted in Fig. 2B. In one prior art system, after object 201 has been tessellated into rectangular shading regions 203, a representation of each shading region 203 is sent to a shader. A color value for each shading region 203 is determined. The renderer then colors individual pixels 225 by determining one or more shading regions 203 that overlay or are adjacent to each pixel 225, and accumulating or averaging the colors associated with those shading regions 203.

In one such method, the shading region 203 representation that is sent to the shader consists of coordinates for the center point 227 of the shading region 203. A color value for each pixel 225 is determined by accumulating or averaging the color values for shading regions 203 whose center points 227 overlay that pixel 225. In the example shown in Fig. 2B, pixel 225S would be assigned the color value associated with shading region 203T, while pixel 225V would be assigned an average of the color values of shading regions 203U and 203V. The average may be weighted according to the positions of the center points of the shading regions 203 being used with respect to the pixel 225 area.

Conventionally, shading regions are often described in terms of micropolygons. One conventional process for micropolygon-based shading and rendering, therefore, includes the steps of: tessellating the object geometry into rectangular micropolygons; running shaders to determine colors of the micropolygons; and accumulating or averaging the micropolygon colors to obtain colors for the covered or nearby pixels. In general, in determining a color value for a pixel, conventional renderers calculate a weighted average of color values corresponding to the one or more micropolygons that overlap the area covered by the pixel. This is usually done by integrating over the area of the pixel, or by obtaining color values for determined sample points within a pixel. Some renderers also take into account color values of adjacent micropolygons, so as to provide smoother results from one point to the next.

See, for example, RenderMan® and the RenderMan® Shading Language, both available from Pixar Animation Studios of Emeryville, California, and described in S. Upstill, The RenderMan Companion, (Addison Wesley 1989), pp. 292-95. The RenderMan® products expose to shaders only a single position and the change in the parametric dimensions (u, v) across the surface element, in order to define rectangles. Also see Mental Ray®, available from Mental Images GmbH & Co. KG of Berlin, Germany, and described in Driemeyer, Rendering with Mental Ray, (Springer 2001), pp. 463-64.

US patent specification US 6,407,736 B1 discloses a deferred scan line conversion architecture. Here, a converter system receives triangle data from a front end processor, identifies the triangles that are in competition for a given pixel location, and determines the winning triangle from among the competing triangles to generate a pixel for that pixel location. In particular, each pixel location comprises a number of sub-pixels. Each sub-pixel can be represented by a single color/intensity value. Moreover, a micro-polygon is a grouping of sub-pixels. Some micro-polygons may be located across the boundaries of different pixels. A scan-out logic identifies all micro-polygons that may be competing for a given sub-pixel location and identifies unobscured visible micropolygon for each sub-pixel location. Once the visible micropolygon has been identified the scan-out logic then converts a micropolygon at the sub-pixel location into a sub-pixel. Then, the scan-out logic further converts the sub-pixels into pixels.

The document by Lee et al.: "Displaced Subdivision Surfaces", Proceedings of 27th Annual Conference of Computer Graphics and Interactive Techniques, 2000, pages 85-94, ISBN:1-58113-208-5 discloses an automatic scheme for converting detailed geometric models into a surface representation, which is labeled as displaced subdivision surface. During the conversion process, an initial control mesh is obtained by simplifying an original mesh. Here, simplification is done using a traditional sequence of edge collapse transformations. Thereafter, the control vertices are globally optimized such that the domain surface more accurately fits the original mesh. Finally, the displacement map is sampled by shooting rays along the domain surface normals until they intersect the original mesh. At the ray intersection points, the side displacement is computed and the surface color is sampled.

The document by Gumhold et al: "Multi Resolution Rendering With Displacement Mapping", Proceedings of the ACM SIGGRAPH/EOROGRAPHICS Workshop on Graphics Hardware, 1999, pages 55-66, Los Angeles, CA, US, ISBN: 1-58113-170-4 discloses an approach for hardware accelerated displacement mapping. The displaced surface is generated from a 2D displacement map by remeshing a coarse triangle mesh according to the screen projection of the surface. Herein, the remeshing resolution is coarsened to a size larger than a pixel. In particular, base triangles which are orthogonal to the view direction are remeshed in a much coarser resolution. Moreover, areas of the displacement map with large slope are remeshed in a higher resolution than areas with a small slope.

The above-described prior art techniques have several limitations. One limitation is that rectangular shading regions do not always provide sufficient precision in defining a region of the image to be shaded. In situations where the shape of the object does not easily map to rectangular shading regions, antialiasing problems can persist.

Furthermore, prior art techniques for avoiding jagged edges, aliasing, and Moiré patterns generally involve drawing bounding boxes or ellipsoids around shading regions, so that the shader can operate over a shading region rather than over a single point. Such techniques offer crude approximations of the actual area covered by the shading region, and often provide inaccurate results. Prior art systems are relatively inflexible in that they typically provide limited options for representing shading regions. Rather than passing a precise definition of each shading region, prior art systems generally provide, at most, the position and overall dimensions of a shading region. This allows construction of a bounding box or ellipsoid, but does not allow for precise shading within a region coextensive with the shading region itself. Conventional schemes are thus limited to a relatively inflexible, and often insufficiently general, definitional scheme that does not allow for accurate shading and rendering of arbitrarily shaped regions. For certain types of objects, conventional shading schemes are therefore unsuitable and may yield substandard results.

### Summary of the Invention

The invention allows shading regions to be defined in terms of shading regions having any number of vertices; thus, shading regions need not be limited to rectangular areas. This allows the shader to perform shading operations on regions that more closely map to the features of the objects being rendered. The present invention thus provides improved flexibility, generality, and precision in defining shading regions and generates images of higher quality than does the prior art.

In one embodiment, each shading region can be a single point, a line segment, a triangle, a general quadrilateral, or any polygonal shape having any number of vertices. A geometric descriptor of each shading region includes a representation of the region in terms of one, two, three, four, or more points. For example, a renderer can pass to the shader a set of coordinates representing vertex locations that define a shading region. The data passed to the shader contains, for example, positional coordinates in three-dimensional space, parametric (u,v) coordinates (in texture space), and/ or arbitrary additional information for defining the shading region. Some embodiments enable shading region definitions of any dimension and having any number of points, parameters, or vertices; other embodiments limit the number of vertices for shading regions to four or to some other fixed maximum.

Given the geometric descriptor for a shading region, the shader determines, to whatever degree of approximation is appropriate, the average color and/or other shading characteristics of the object across the shading region. The renderer then assigns a color to each pixel of the final image by accumulating color values for shading regions that overlay or that are close to that pixel. If more than one shading region overlays or is close to a pixel, the color value for the pixel is determined by averaging, integrating, or point-sampling the color values for the overlaying or nearby shading regions. Since such operations are performed using the exact dimensions and shape of the shading regions (which are not limited to rectangles), the resulting color value for a pixel can be more accurately determined than with prior art methods.

The present invention allows greater precision in defining shading regions, and thereby facilitates improved shading results. Furthermore, the invention provides a greater degree of generality in defining shading regions and passing such definitions to shaders. This increased level of generality allows for improved representations of certain types of objects such as particles, curves (such as strands of hair or fur), and complex connected-surface geometry, that are difficult to describe accurately using rectangular shading regions.

The present invention additionally provides an improved shader interface that allows shading regions having arbitrary numbers of vertices to be passed to a shader. This allows the shader to perform more accurate shading operations that extend over the exact shading regions. The interface allows for the passing of shading regions as sets of one or more vertices, so that a renderer can pass shading regions of various shapes, including points, lines, and N-sided polygons, to the shader. In one embodiment, the user is able to select the particular shape for each shading region. Furthermore, shading region shapes can also be determined by the rendering architecture (e.g. micropolygon-based, ray tracer, particle renderer, and the like). The shaders themselves need not be aware of which rendering architecture is used.

The present invention is also applicable to computer graphics generation systems that employ ray tracing approaches. In ray tracing, a polygonal geometry is constructed. Pixel colors are computed from point samples that are intersected with the geometry and then shaded based on points and/ or overall area sizes. Using the present invention, a ray tracer can pass, to shaders, shading region definitions representing either the exact intersection points, or an estimated quadrilateral area to be sampled (for example, approximately representing the present pixel), or the geometric polygon that was determined to intersect the ray (for example, a triangle). In either case, using the invention, existing shaders can be applied unmodified, and existing shaders can be used in the same manner as in a micropolygon-based renderer. This allows for more generality and accuracy in shading operations and computations.

The features and advantages described in this summary and the following detailed description are not all-inclusive. Many additional features and advantages will be apparent to one of ordinary skill in the art in view of the drawings, specification, and claims hereof.

Moreover, it should be noted that the language used in this disclosure has been principally selected for readability and instructional purposes, and may not have been selected to delineate or circumscribe the inventive subject matter, resort to the claims being necessary to determine such inventive subject matter.

### Brief Description of the Drawings

Fig.1 is a block diagram depicting functional modules for performing shading operations according to one embodiment of the present invention.

Fig. 2A depicts a shading technique using pixel center points, according to the prior art.

Fig. 2B depicts shading techniques using shading region center points, according to the prior art.

Fig. 3 depicts a shading technique using shading regions having arbitrary numbers of vertices, according to one embodiment of the present invention.

Figs. 4A and 4B depict an example of applying the present invention to shade a transition region between two object areas.

Fig. 5 depicts an example of texture map application using techniques of the present invention.

Figs. 6A and 6B depict mapping and shading for shading regions having various shapes.

Fig. 7 is a flowchart depicting a method for practicing the present invention, according to one embodiment.

Fig. 8 depicts a technique for applying a texture map by selecting individual points within a shading region, according to one embodiment of the present invention.

The figures depict a preferred embodiment of the present invention for purposes of illustration only. One skilled in the art will readily recognize from the following discussion that alternative embodiments of the structures and methods illustrated herein may be employed without departing from the principles of the invention described herein.

### Detailed Description

### System Architecture

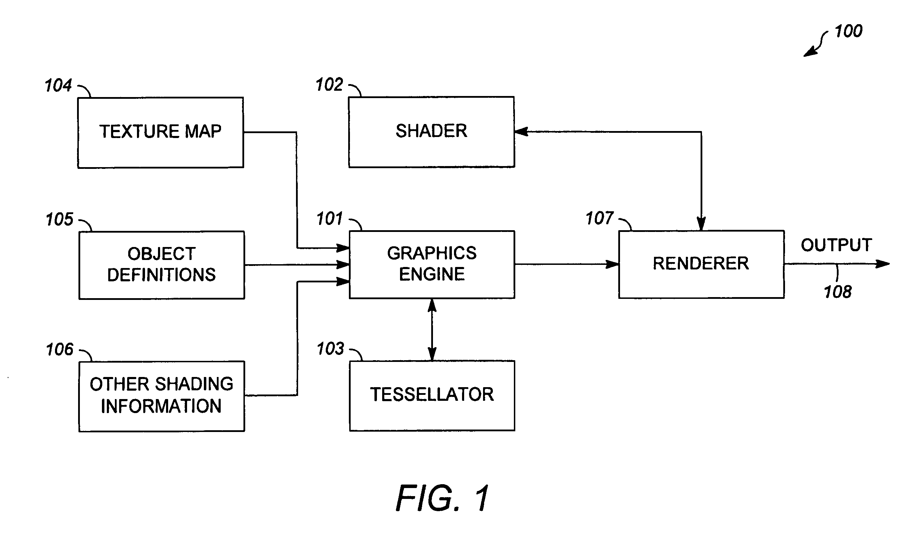

Referring now to Fig.1, there is shown a block diagram of a set of functional modules for practicing the present invention. The functional modules depicted in Fig. 1 form a system 100 that can be implemented, for example, in a conventional personal computer or workstation using an Intel Pentium processor and running the Linux operating system. One skilled in the art will recognize that the particular arrangement of modules as well as their names and interconnections as depicted in Fig.1 are merely exemplary, and that many variations are possible without departing from the essential characteristics of the invention.

Graphics engine 101 performs most of the processing involved in generating computer graphics imagery. Such processing includes, for example: performing transformations to properly size, place, deform, and transform objects; hidden surface removal; animation; and the like. Shader 102, which may be implemented as a plug-in or as an integrated or separate software component, assigns color values to objects and regions including those defined by engine 101. Tessellator 103 divides objects (or portions thereof) into shading regions, according to techniques described in more detail below. Texture map 104 contains an image, such as a bitmap, that is to be mapped onto an object. One skilled in the art will recognize that texture map 104 may be omitted from such a system, and that the shading operations described herein can be based on color information from sources other than texture maps 104, including for example object surface information, lighting, and other shading information 106. For example, for area light sources, shader 102 may apply color values based on the nature of the surface emitting the light; for materials and surfaces, shader 102 may apply color values based on surface characteristics of the geometric primitives being shaded.

Object definitions 105 include representations and descriptors that specify positions, sizes, surface characteristics, and the like for objects. Other shading information 106 includes additional parameters and data that affects shading operations, including for example shadow information, light sources, and the like. Renderer 107 is a software component that applies the determined color values and generates a final image that is ready to be output 108. The final image can be stored, displayed; converted to other formats, or subject to further processing as needed.

### Shading Using Generalized Shading Regions

Shader 102 determines and assigns color values for shading regions; based on these color values, renderer 107 determines colors for pixels and pixel regions in the final image. To do so, shader 102 combines information from: object definitions 105 specifying the position, size, and shape of each object; texture map 104 (or other surface characteristics) for objects; and other shading information 106 such as lighting characteristics.

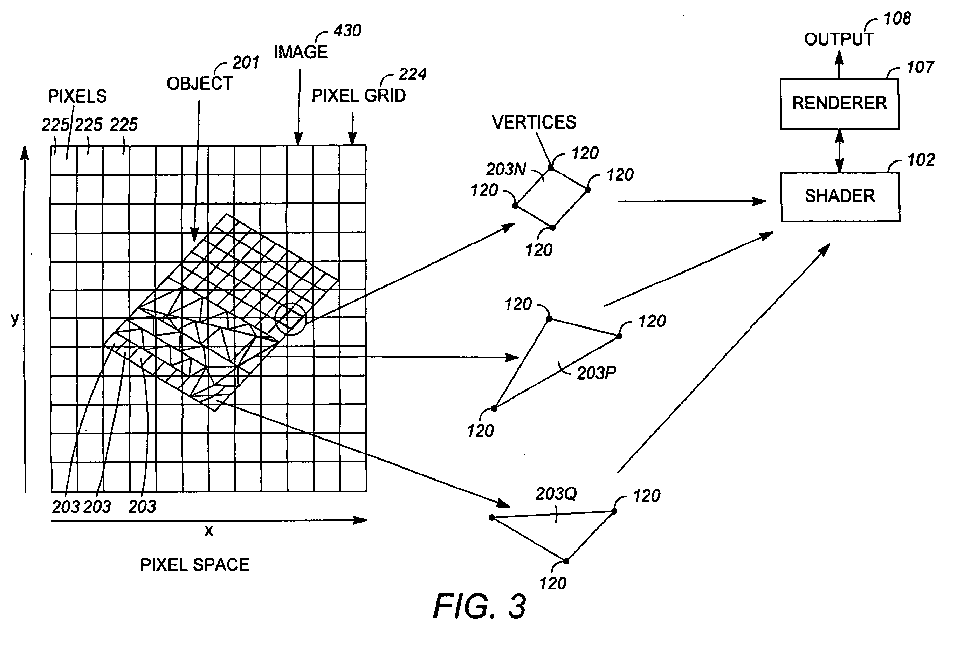

Referring now to Fig. 3, there is shown an example of a shading technique according to one embodiment of the present invention. Object 201 is tessellated into shading regions 203, which in one embodiment can be of any shape. In one embodiment, only a portion of object 201 is tessellated; for example, the system may tessellate only that portion of object 201 that will be visible in the image. Reference herein to the tessellated object is to be understood to include reference to either the entire object, or to the tessellated portion of an object, as appropriate. In the example of Fig. 3, some shading regions are rectangular and some are triangular. In general, shading regions can be polygonal in shape, or can be any other shape that is definable in terms of one or more vertex points. One skilled in the art will recognize that other variations are possible, wherein the invention can handle other types of shapes as well.

The tessellated object 201 is shown overlaid on pixel grid 224 in pixel space. Superimposing the tessellated object 201 on pixel grid 224 yields a correspondence between pixel 225 locations and shading regions 203; specifically, each pixel 225 location that lies within the bounds of object 201 overlays, at least in part, at least one shading region 203. Shader 102 determines one or more colors for each shading region 203 by computing the appropriate color or colors for the point or regions represented by the shading region 203. The renderer 107 then applies the shading region 203 colors to pixels 225 covered by or near shading region 203.

The present invention additionally provides an improved interface to shader 102 that allows shading regions having arbitrary numbers of vertices to be passed to shader 102. Shader 102 can thereby perform more accurate shading operations that extend over the exact shading regions. The interface allows for the passing of shading regions as sets of one or more vertices, so that renderer 107 can pass shading regions of various shapes, including points, lines, and N-sided polygons, to shader 102. The shader interface is described in more detail below.

In the example of Fig. 3, shading region 203N is a quadrilateral defined by four vertices 120, and shading regions 203P and 203Q are triangles defined by three vertices 120. In other examples, some shading regions 203 might be defined as line segments or point locations, and others may be polygons. For each of these shading regions 203, renderer 107 passes to shader 102 a precise description. The shading region definition is passed using a generalized parametric scheme as described herein. The description includes, for example, coordinate locations for all of the vertices of the shading region 203. In one embodiment, renderer 107 passes a single shading region definition at a time to shader 102; in another embodiment, renderer 107 passes a plurality of shading region definitions concurrently to shader 102, each shading region being defined by a set of one or more vertices. In one embodiment, renderer 107 passes this information to shader 102 using an interface that allows for any number of vertices, as described in more detail below. In another embodiment, the interface allows for a maximum of four vertices for each shading region; one skilled in the art will recognize that any fixed maximum can be established. In some embodiments, such maximum limits allow for performance optimizations and may facilitate improved memory allocation operations, since the compiler can allocate a predetermined fixed amount of memory to handle the shading region data being passed to shader 102.

A color value for each shading region 203 is determined. Individual pixels 225 are then colored by determining one or more shading regions 203 that overlay or are adjacent to each pixel 225, and determining a color value for each pixel 225 based on the colors associated with those shading regions 203. If more than one shading region 203 overlays a pixel 225, the color value for the pixel 225 is determined by averaging, integrating, or point-sampling the color values for the overlaying shading regions 203.

Once shader 102 has determined color values, renderer 107 generates the final image, which is output 108 for display or storage.

By allowing for shading regions 203 having arbitrary numbers of vertices, the present invention provides improved accuracy and generality for shading operations.

### Transition Regions

Another advantage to the technique of the present invention is that it provides a mechanism for shading transition regions or other unusual areas of images.

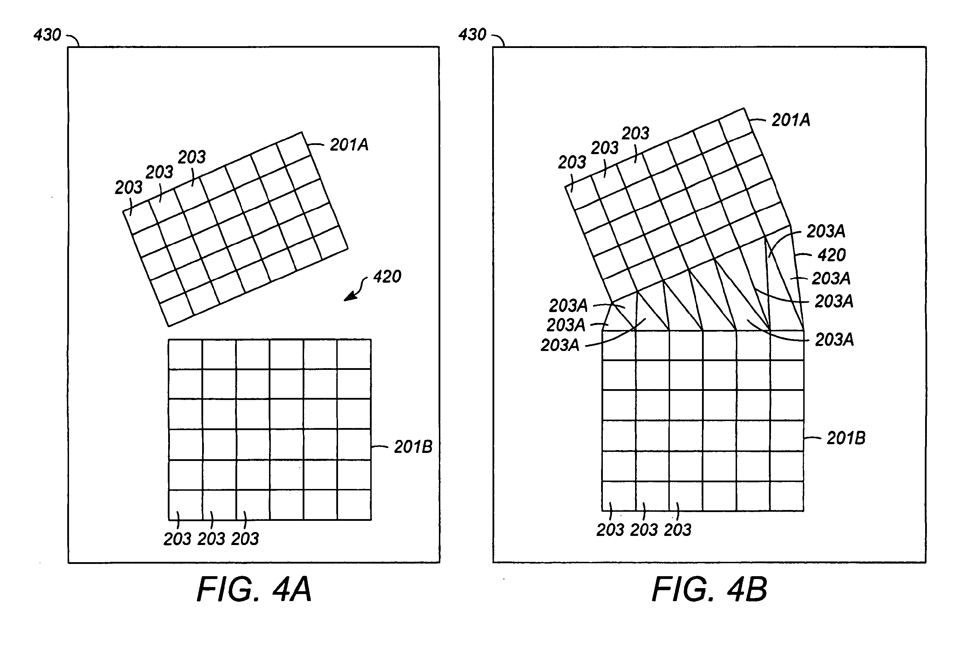

Referring now to Figs. 4A and 4B, there is shown an example of such a situation. In Fig. 4A, image 430, including two objects 201A and 201B, is shown. Each object 201A, 201B has been tessellated. Region 420 of image 430 is a transition region that lies between objects 201A and 201B. The size of transition region 420 is exaggerated for illustrative purposes. Conventional shading operations would leave a discontinuity in transition region 420, resulting in an abrupt and often noticeable change in the colors in the regions. Alternatively, some type of blending operation might be performed between objects 201A and 201B to ameliorate the discontinuity. Either approach potentially produces undesirable artifacts and inaccuracies in the final image.

The present invention avoids such problems by providing a mechanism for tessellating transition region 420 using shading regions 203 having arbitrary numbers of vertices. Referring to Fig. 4B, region 420 is tessellated into shading regions 203A having triangular shapes. The particular shapes for shading regions 203A can be selected according to the particular characteristics of transition region 203 and of the overall image. In one embodiment, transition region 420 is formed by stretching and gluing existing regions 201A and 201B. In the example shown, vertices of shading regions 203A of transition region 420 are selected to coincide with vertices of shading regions 203 of regions 201A and 201B; this technique is employed, in one embodiment, so that transition region 420 is tessellated using as many preexisting vertices as possible.

By providing the ability to pass shading regions 203 having arbitrary numbers of vertices to shader 102, the present invention facilitates improved color accuracy for shading transition regions or other unusual areas.

### Texture Map Application

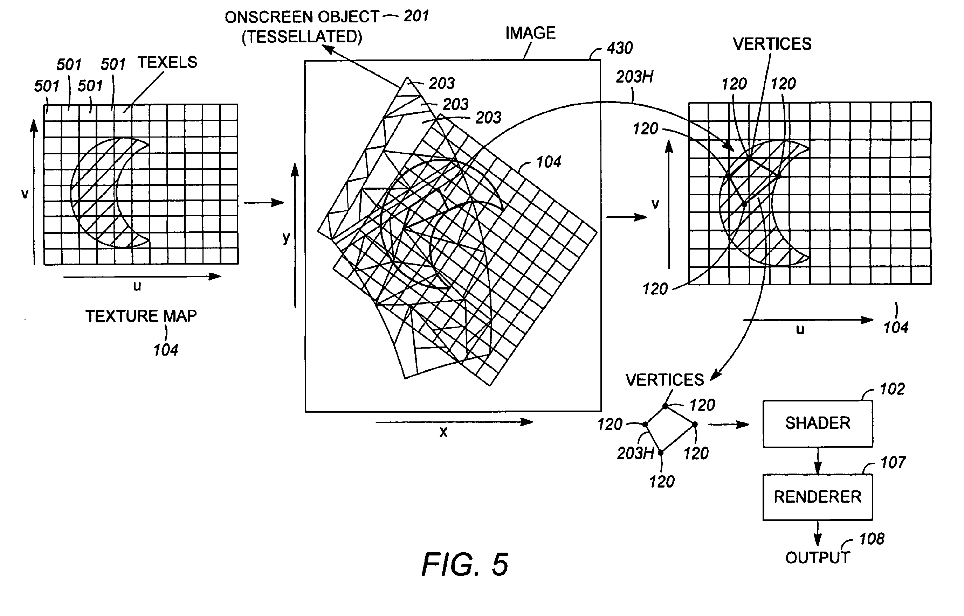

In one embodiment, the present invention can be used to apply a texture map to a surface of an object. Here, shading regions are passed to shader 102 in terms of their (u,v) coordinates in texture space, rather than in terms of (x,y) pixel space coordinates. Referring now to Fig. 5, there is shown an example of this process.

Texture map 104 is represented as an image, such as a bitmapped image, defined in a texture space using coordinate system (u,v). Texture map 104 is divided into a grid of texels 501, which are analogous to pixels in an ordinary image. A user (or other entity) defines a region of object 201 to which the texture is to be applied. Based on this definition, each relevant point of the object 201 has a corresponding (u,v) coordinate representing a location within texture map 104.

As described above, according to the techniques of the present invention, object 201 is tessellated into any number of arbitrary shading regions 203. The shape of these shading regions 203 can be selected to match particular features of object 201, so as to provide improved accuracy and quality of the final image. Each shading region 203 is passed to shader 102.

The center portion of Fig. 5 shows texture map 104 applied to object 201 in pixel (x,y) space. Each shading region 203 in the relevant portion of object 201 overlaps a portion of texture map 104 that corresponds to one or more texels 501. For example, shading region 203H, depicted as an arbitrary quadrilateral in the middle portion of Fig. 5, overlaps an area corresponding to several texels 501 of texture map 104. Since object 201 has an arbitrary surface size, shape, and orientation in three-dimensional space, which maps to a two-dimensional area in the final image, texture map 104 is appropriately deformed when it is applied to object 201.

In the right-hand portion of Fig. 5, the same shading region 203H is shown in texture (u,v) space. For clarity, other shading regions 203 of object 201 are omitted from the right-hand portion of Fig. 5. The mapping of shading region 203H onto texture (u,v) space is performed by an inverse of the transformation that maps texture map 104 onto object 201. Such transformations and inverses thereof, are well known in the art. The resultant shading region 203H in (u,v) space is an arbitrary quadrilateral. In general, the shading region 203H in (u,v) space may be a point, line, triangle, quadrilateral, or other shape, and it may overlap any number of texels 501. Vertices 120 of the quadrilateral are passed to shader 102 using a generalized parametric scheme for passing shading regions having any number of vertices 120.

Prior art shading methods would pass an approximation of shading region 203H to a shader. For example, a rectangular bounding box might be constructed around each shading region, so that the shader would receive coordinates and dimensions of the bounding box rather than receive a precise definition of the shading region 203H itself. In another prior art method, an ellipsoid might be constructed around shading region 203H, and the shader would receive coordinates and dimensions of the ellipsoid. Either way, because the shader would receive an approximation of the shading region, the resulting color determinations would be inaccurate.

The present invention overcomes this problem by allowing the shader 102 to receive the vertex 120 locations for the actual shading region 203H, so that shader 102 can precisely apply color values to the area defined by shading region 203H. For each shading region 203 it receives for shading, shader 102 applies color data from the region of texture map 104 corresponding to the actual area defined by shading region 203. Shader 102 performs this operation by mapping shading region 203 to a region on texture map 104, determining which texels 501 lie within the texture map 104 region, and applying color values from those texels 501. For example, if shading region 203H maps to blue texels 501 in texture map 104, shader 102 applies blue to the region of object 201 covered by shading region 203H. If more than one texel 501 lies within the region, shader 102 determines a color for the region by combining color data from the texels 501 within the region. This combining operation may include, for example, averaging, integrating, or point-sampling across the region.

Thus, rather than determining a texture map color at a single point, or over a rectangular or ellipsoid region that is an approximation of the shading region, the present invention applies texture map data to objects 201 using accurate representations of shading regions having arbitrary numbers of vertices, thus yielding more accurate results.

As described above, once shader 102 has determined color values, renderer 107 generates the final image, which is output 108.

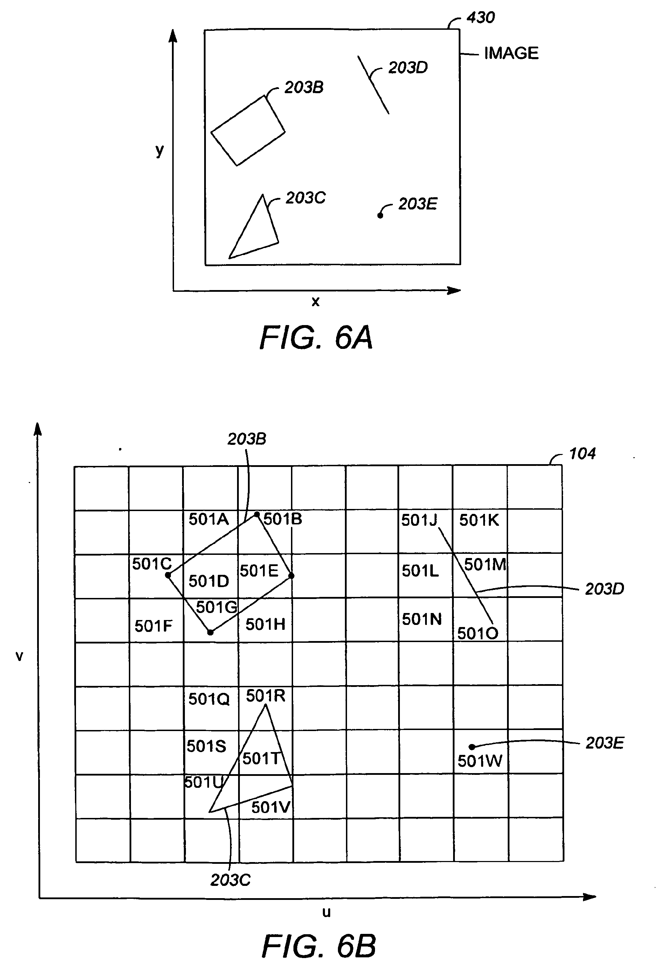

Referring now to Figs. 6A and 6B, there are shown variations of the above-described technique for different types of shading regions. Fig. 6A depicts shading regions of various forms and shapes, including region 203B (quadrilateral), region 203C (triangle), region 203D (line segment), and region 203E (point) in pixel (x,y) space. Presumably, these shading regions 203B, 203C, 203D, 203E are part of an object 201, although the object 201 has been omitted from Figs. 6A and 6B for clarity. Fig. 6B depicts each shading region 203B, 203C, 203D, 203E in texture (u,v) space, overlaid on texture map 104. Shader 102 determines color values for shading regions 203B, 203C, 203D, 203E based on the color values of the texels overlaid by each shading region 203B, 203C, 203D, 203E. As depicted in Fig. 6B, therefore, shader 102 determines:

a color value for shading region 203B using color values from texels 501A through 501H;

a color value for shading region 203D using color values from texels 501J through 501P;

a color value for shading region 203C using color values from texels 501Q through 501V; and

a color value for shading region 203E using a color value from texel 501W.

In an alternative embodiment more sophisticated methods are used for determining color values for shading regions. For example, the shader 102 may take into account texels 501 that are close to, but not overlaid by, each shading region 203; specifically, a shading region 203 can be shaded using color values from texels 501 that lie within a predefined distance (measured in pixels or texels) from the boundaries of the shading region 203. Alternatively, the shading region can be convoluted by a smooth filter kernel so that more texels 501 are taken into account in determining the final color. As described above, where a shading region 203 overlays more than one texel 501, shader 102 averages the color values from all of the overlaid texels 501. Weighted averaging, or integrating, or point-sampling is used to determine a final color value. Unlike prior art methods, the method of the present invention performs such averaging, integrating, or point-sampling over the exact area defined by the shading region 203.

### Shadows

Certain components of graphics systems compute the effect of shadows to be applied to surfaces, including determining which points or regions on an object are fully illuminated, occluded, or partially shadowed. See, for example, Woo et al., "A Survey of Shadow Algorithms," in IEEE Computer Graphics and Applications, vol.10, no. 6, pp.13-32 (1990). These data are then combined with other characteristics of the objects, such as color, texture, and the like, to determine a final color value for each pixel of the image. The present invention can be used in conjunction with well-known shadow algorithms to more accurately determine and apply shadows factors to objects. Shader 102 determines shadows across a precise shading region having an arbitrary number of vertices (such as a point, line, triangle, quadrilateral, or arbitrary polygon). This is accomplished according to techniques analogous to the techniques described above. Since the shading regions are not limited to rectangles or other micropolygons, but rather can be defined based on particular characteristics of the object and lighting in the scene, the present invention allows for improved precision in applying shadows to images.

In one embodiment, for example, shader 102 averages the shadow computation over each defined shading region. Alternatively, shader 102 selects points within each defined shading region, determines how to apply a shadow at each point, and averages the results.

### Shader Interface

As discussed above, renderer 107 passes to shader 102 a precise description of the shading region defined by each shading region 203, using a generalized parametric scheme. In one embodiment of the present invention, the following shader interface is used.

Each shading region 203 has a number of vertices 120. According to the shader interface, renderer 107 passes to shader 102 data describing coordinates of each vertex 120 (for example in pixel space, three-dimensional space, or texture (u,v) space). Depending on the number of vertices passed, a different type of shading region is described, as follows:

| **Number of Vertices** | **Type of Surface** |
|---|---|
| 0 | No Surface Area Available |
| 1 | Shade a Single Point |
| 2 | Area is a Line Segment |
| 3 | Triangle |
| 4 | Quadrilateral |
| ... | ... |

In one embodiment, shader 102 makes appropriate calls to a shader library containing methods for shading regions of different shapes. The methods of the shader library handle various types of shading regions by defining tuples of values instead of single values. Unlike prior art systems that are limited to providing position and dimension (such as a (u,v) coordinate and a (Du,Dv) dimension), the present invention facilitates passing multiple tuples of values, thus allowing a number of vertices to be defined and passed for each shading region.

More specifically, instead of using variables describing the position, texture coordinates, and perhaps other data for a single point, the shader library handles tuples or arrays of variables. These variables describe the positions, texture coordinates, and the like at multiple points.

The following is an example of code for identifying the type of shading region, according to one embodiment. One skilled in the art will recognize that the maximum tuple size can be set to 4 or to any variable, to specify the maximum number of vertices per shading region; alternatively a more generalized scheme can be provided whereby each shading region can have any number of vertices.

```
 /*
 * a tuple is a polygonal region, which is empty, a point, a line, a
 triangle, a quadrilateral, or another polygon.
 */
 /* is data type a tuple type? */
 #define SHADER_DATA_TYPE_is_tuple(type) ((type) >= SHADER_DATA_TUPLE)
 /* get tuple type from element type */
 #define SHADER_DATA_TYPE_tuple(type) ((type) + SHADER_DATA_TUPLE)
 /* get element type from tuple type */
 #define SHADER_DATA_TYPE_from_tuple(type) \
   (SHADER_DATA_TYPE_is_tuple(type) ? (type) - SHADER_DATA_TUPLE :
 (type))
 /* data types for example for map evaluations */
 /* layout so that tuple types are the base type + 16 */
 typedef enum {
  SHADER_DATA_NONE = 0,
  SHADER_DATA_FLOAT, /* float */
  SHADER_DATA_FLOAT2, /* V2F, e.g. bump offsets */
  SHADER_DATA_FLOAT3, /* V3F, color or vector */
  SHADER_DATA_INTEGER, /* int */
  SHADER_DATA_POINTER, /* void pointer */
  SHADER_DATA_STRING, /* char pointer */
  SHADER_DATA_TUPLE = 0x10,
  SHADER_DATA_FLOAT_TUPLE, /* float[] tuple */
  SHADER_DATA_FLOAT2_TUPLE, /* V2F [], e.g. bump offsets array */
  SHADER_DATA_FLOAT3_TUPLE, /* V3F [], color or vector tuple */
  SHADER_DATA_INTEGER_TUPLE, /* int [] */
  SHADER_DATA_POINTER_TUPLE, /* void *[] */
  SHADER_DATA_STRING_TUPLE /* char *[] */
 } SHADER_DATA_TYPE;
```

The following function type declaration shows a scheme for passing data through the interface, according to one embodiment. "Name" describes the particular data associated with the points (such as vertex positions, texture coordinates, or arbitrary other named data). "Type" identifies the type of data as defined above. "Data" is a pointer to the data, which are represented as mentioned above in the definition of the various types:

```
     /* callback to get data from a shader */
     typedef int (*SHADER_DATA_CALLBACK)(SHADER *shader,
                                      void *callback_data,
                                      char *name,
                                      SHADER_DATA_TYPE type,
                                      void *data);
```

### Point Sampling

In one embodiment, shader 102 determines a color for a shading region by selecting a number of points within the shading region, and determining a color value for each point. Points can be selected according to any of several well known point selection methods, such as regular sampling, stochastic sampling, low discrepancy sequence sampling, or the like. The invention is not limited to any particular point selection technique.

Color values determined at the various points within the shading region are then averaged or accumulated to develop a final value. In this manner, shader 102 is able to determine an appropriate color for the entire shading region.

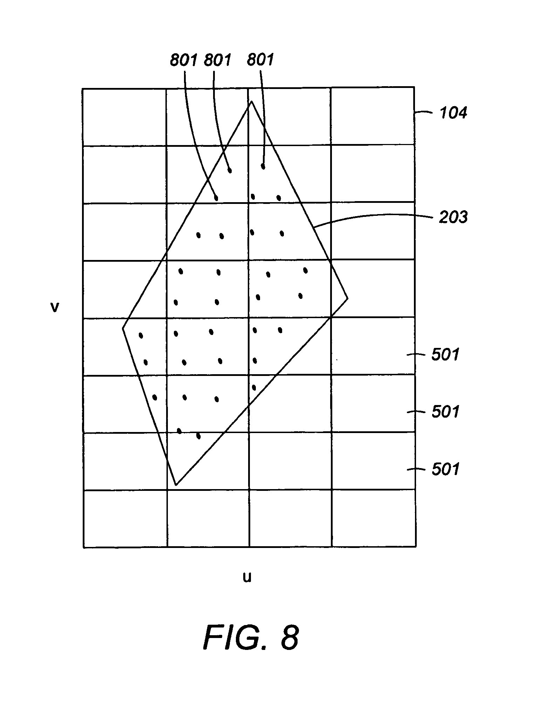

Referring now to Fig. 8, there is shown an example of point-sampling. Shading region 203 is shown in texture (u,v) space, overlaid on a portion of texture map 104. Individual points 801 within shading region 203 are selected. For each point 801, shader 102 determines a color value for the underlying texel 501. Color values for points 801 throughout shading region 203 are accumulated and averaged, to determine a final color value for shading region 203. Texels 501 containing more points 801 will be given greater weight in the averaging operation. Since the number of points 801 in a texel 501 provides an approximation of the relative area of shading region 203 found within that texel 501, the point-sampling technique effectively approximates an average color value that would be determined by continuous integration across the surface defined by shading region 203.

In one embodiment, rather than sampling a texture map, shader 102 implements a procedural checkerboard map shader, wherein shader 102 counts the number of samples lying on areas of various colors (such as black, white, or other colors), and computes an average color.

### Method of Operation

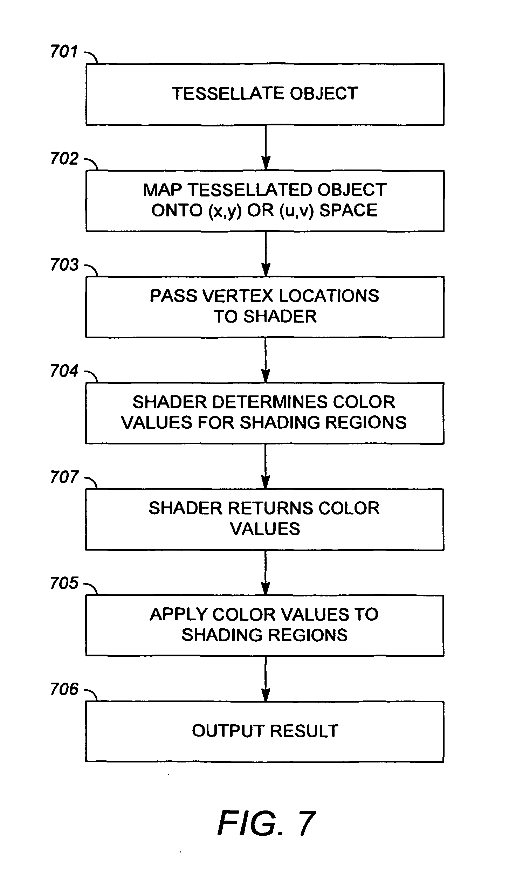

Referring now to Fig. 7, there is shown a flowchart depicting a method for practicing the present invention according to one embodiment. Object 201 is tessellated 701 into a number of shading regions 203 having arbitrary numbers of vertices. The tessellated object 201 is mapped 702 onto pixel (x,y) space, or texture map (u,v) space, or some other coordinate system. The transformation from object space into another coordinate system yields locations in the new coordinate system for each vertex 120 of each shading region 203. These shading region vertex 120 locations are passed 703 to shader 102. Shader 102 then determines 704 color values for each shading region 203. This can be done by any of the above-described approaches (e.g., calculating an average across the region defined by the shading region 203; integrating across the shading region 203; point-sampling across the shading region 203) or their equivalents. The source of the color values used in the shading operation can be a texture map 104, lighting information, surface characteristics of object 201, or the like. Shader returns 707 the determined color values. Renderer 107 then applies 705 the colors to the appropriate areas of the image. The final result is then output 706 to storage or display.

The foregoing description of the embodiments of the invention has been presented for the purposes of illustration and description. It is not intended to be exhaustive or to limit the invention to the precise forms disclosed. Persons skilled in the relevant art can appreciate that many modifications and variations are possible in light of the above teaching. Persons skilled in the art will recognize various equivalent combinations and substitutions for various components shown in the figures. It is therefore intended that the scope of the invention be limited not by this detailed description, but rather by the claims appended hereto.

## Claims

1. A computer-implemented method of shading an object (201) in a computer-generated image, comprising :
tessellating the object (201) into shading regions (203), including nonrectangular shading regions having at least two vertices;
determining color values for at least a subset of the shading regions; and applying the determined color values to areas of the object corresponding to the shading regions (203),
wherein the image comprises a plurality of pixels (225),
and wherein applying the determined color values comprises, for each of at least a subset of the pixels:
applying, to the pixel (225), a determined color value corresponding to at least one shading region (203) overlaying at least a portion of the pixel (225); and
wherein determining a color value for a shading region (203) comprises passing a representation of the shading region to a shader (102), and receiving a color value from the shader (102);
wherein passing a representation of the shading region comprises passing a set of vertices defining the shading region (203) and/or
a generalized parametric description of the shading region (203).

2. The method of claim 1, wherein the shading regions (203) include polygonal shading regions.

3. The method of claim 1,
wherein applying the determined color values comprises, for each of at least a subset of the pixels:
combining determined color values corresponding to at least two shading regions (203) overlaying at least a portion of the pixel (225), to derive a color value for the pixel; and
applying the derived color value to the pixel.

4. The method of claim 3, wherein combining the color values comprises determining an average of the color values.

5. The method of claim 3, wherein combining the color values comprises determining a weighted average of the color values.

6. The method of claim 3, wherein combining the color values comprises accumulating the color values.

7. The method of claim 1, wherein determining a color value for a shading region (203) comprises:
mapping the shading region (203) to a corresponding region on a texture map (104); and
determining a color value for the texture map region.

8. The method of claim 7, wherein determining a color value for the texture map region comprises retrieving at least one texel color value.

9. The method of claim 7, wherein determining a color value for the texture map region comprises determining an average color value for the texture map region.

10. The method of claim 9, wherein determining an average color value for the texture map region comprises:
responsive to there being more than one color value for the texture map region, determining a weighted average color from the color values for the region.

11. The method of claim 10, wherein the weighted average color is weighted according to the relative area covered by each color value within the texture map region.

12. The method of claim 9, wherein determining an average color value for the texture map region comprises accumulating color values for a plurality of point samples within the texture map region.

13. The method of claim 1, wherein at least one shading region comprises a micropolygon.

14. The method of claim 1, wherein at least one shading region comprises one selected from the group consisting of :
a line segment;
a triangle; and
a nonrectangular polygon.

15. The method of claim 1, wherein determining a color value for a shading region (203) comprises:
responsive to the shading region (203) corresponding to an area of the object affected by a shadow, applying a shadow factor to determine the average color value for the shading region (203).

16. The method of claim 1, wherein tessellating the object (201) into a plurality of shading regions (203) comprises :
tessellating a first portion of the object into a plurality of shading regions of a first type; and
tessellating a second portion of the object into a plurality of shading regions of a second type.

17. The method of claim 16, wherein:
the shading regions of the first type each have a first number of vertices; and
the shading regions of the second type each have a second number of vertices ;
wherein the first number is different from the second number.

18. The method of claim 1, wherein tessellating the object (201) into a plurality of shading regions (203) comprises tessellating the object into shading regions having shapes derived from at least one characteristic of the object.

19. The method of claim 18, wherein the at least one characteristic of the object comprises at least one selected from the group consisting of:
surface features;
shapes; colors ;
deformations; and
vertices.

20. The method of claim 1, wherein tessellating the object into a plurality of shading regions comprises:
tessellating a first and a second portion (201A, 201B) of the object into a plurality of shading regions; and;
tessellating a transition area (420), adjacent to the first and the second portions, into a plurality of shading regions (203).

21. The method of claim 1, wherein tessellating the transition area (420) comprises tessellating the transition area into a plurality of nonrectangular shading regions.

22. The method of claim 1, wherein a single shading region representation at a time is passed to the shader (102).

23. The method of claim 1, wherein a plurality of shading region representations is passed concurrently to the shader (102).

24. A computer program product for shading an object in a computer- generated image, comprising:
a computer-readable medium ; and
computer program code, encoded on the medium, for:
tessellating the object (201) into shading regions (203), including nonrectangular shading regions having at least two vertices;
determining color values for at least a subset of the shading regions (203); and
applying the determined color values to areas of the object corresponding to the shading regions (203),
wherein the image comprises a plurality of pixels (225), and wherein the computer program code for applying the determined color values comprises computer program code for, for each of at least a subset of the pixels:
applying, to the pixel (225), a determined color value corresponding to at least one shading region overlaying at least a portion of the pixel (225); and
wherein the computer program code for determining a color value for a shading region (203) comprises computer program code for passing a representation of the shading region to a shader (102), and receiving a color value from the shader (102);
wherein the computer program code for passing a representation of the shading region (203) comprises computer program code for passing a set of vertices defining the shading region (203) and/or
a generalized parametric description of the shading region (203).

25. The computer program product of claim 24, wherein the shading regions (203) include polygonal shading regions.

26. The computer program product of claim 24, wherein the computer program code for applying the determined color values comprises computer program code for, for each of at least a subset of the pixels (225):
combining determined color values corresponding to at least two shading regions (203) overlaying at least a portion of the pixel (225), to derive a color value for the pixel; and
applying the derived color value to the pixel (225).

27. The computer program product of claim 26, wherein the computer program code for combining the color values comprises computer program code for determining an average of the color values.

28. The computer program product of claim 26, wherein the computer program code for combining the color values comprises computer program code for determining a weighted average of the color values.

29. The computer program product of claim 26, wherein the computer program code for combining the color values comprises computer program code for accumulating the color values.

30. The computer program product of claim 24, wherein the computer program code for determining a color value for a shading region comprises computer program code for:
mapping the shading region to a corresponding region on a texture map (104); and
determining a color value for the texture map region.

31. The computer program product of claim 30, wherein the computer program code for determining a color value for the texture map region comprises computer program code for retrieving at least one texel color value.

32. The computer program product of claim 30, wherein the computer program code for determining a color value for the texture map region comprises computer program code for determining an average color value for the texture map region.

33. The computer program product of claim 32, wherein the computer program code for determining an average color value for the texture map region comprises computer program code for:
responsive to there being more than one color value for the texture map region, determining a weighted average color from the color values for the region.

34. The computer program product of claim 33, wherein the weighted average color is weighted according to the relative area covered by each color value within the texture map region.

35. The computer program product of claim 32, wherein the computer program code for determining an average color value for the texture map region comprises computer program code for accumulating color values for a plurality of point samples within the texture map region.

36. The computer program product of claim 24, wherein at least one shading region (203) comprises a micropolygon.

37. The computer program product of claim 24, wherein at least one shading region (203) comprises one selected from the group consisting of:
a line segment;
a triangle; and
a nonrectangular polygon.

38. The computer program product of claim 24, wherein the computer program code for determining a color value for a shading region (203) comprises computer program code for:
responsive to the shading region (203) corresponding to an area of the object affected by a shadow, applying a shadow factor to determine the average color value for the. shading region.

39. The computer program product of claim 24, wherein the computer program code for tessellating the object into a plurality of shading regions (203) comprises computer program code for:
tessellating a first portion of the object into a plurality of shading regions of a first type; and
tessellating a second portion of the object into a plurality of shading regions of a second type.

40. The computer program product of claim 39, wherein:
the shading regions of the first type each have a first number of vertices; and
the shading regions of the second type each have a second number of vertices;
wherein the first number is different from the second number.

41. The computer program product of claim 24, wherein the computer program code for tessellating the object into a plurality of shading regions comprises computer program code for tessellating the object into shading regions having shapes derived from at least one characteristic of the object.

42. The computer program product of claim 41, wherein the at least one characteristic of the object (201) comprises at least one selected from the group consisting of:
surface features;
shapes;
colors;
deformations; and
vertices.

43. The computer program product of claim 24, wherein the computer program code for tessellating the object (201) into a plurality of shading regions (203) comprises computer program code for:
tessellating a first and a second portion of the object into a plurality of shading regions (203); and tessellating a transition area (420), adjacent to the first and the second portions, into a plurality of shading regions (203).

44. The computer program product of claim 24, wherein the computer program code for tessellating the transition area (420) comprises computer program code for tessellating the transition area (420) into a plurality of nonrectangular shading regions.

45. The computer program product of claim 24, wherein a single shading region representation at a time is passed to the shader (102).

46. The computer program product of claim 24, wherein a plurality of shading region representations is passed concurrently to the shader (102).

47. A system for shading an object in a computer-generated image, comprising:
a tessellator (103), for tessellating the object (201) into shading regions (203), including
nonrectangular shading regions having at least two vertices;
a shader (102) for determining a color value for at least a subset of the shading regions (203); and
a renderer (107), coupled to the shader, for applying the determined color values to areas of the object (201) corresponding to the shading regions (203);
wherein the image comprises a plurality of pixels (225), and wherein the renderer (107), for each of at least a subset of the pixels:
applies, to the pixel (225), a determined color value corresponding to at least one shading region (203) overlaying at least a portion of the pixel,
wherein the shader (102) receives a representation of the at least one shading region comprising a set of vertices defining the at least one shading region and/or
a generalized parametric description of the shading region (203).

48. The system of claim 47, wherein the shading regions (203) include polygonal shading regions.

49. The system of claim 47, wherein the image comprises a plurality of pixels, and wherein the renderer (107), for each of at least a subset of the pixels:
combines determined color values corresponding to at least two shading regions (203) overlaying at least a portion of the pixel, to derive a color value for the pixel (225); and
applies the derived color value to the pixel (225).

50. The system of claim 49, wherein the renderer (107) combines the determined color values by determining an average of the color values.

51. The system of claim 49, wherein the renderer (107) combines the determined color values by determining a weighted average of the color values.

52. The system of claim 49, wherein the renderer (107) combines the determined color values by accumulating the color values.

53. The system of claim 47, wherein the shader (102) determines a color value for a shading region by:
mapping the shading region to a corresponding region on a texture map (104); and
determining a color value for the texture map region.

54. The system of claim 53, wherein the shader determines a color value for the texture map region by retrieving at least one texel color value.

55. The system of claim 53, wherein the shader determines a color value for the texture map region by determining an average color value for the texture map region.

56. The system of claim 55, wherein the shader determines an average color value for the texture map region by:
responsive to there being more than one color value for the texture map region, determining a weighted average color from the color values for the region.

57. The system of claim 56, wherein the weighted average color is weighted according to the relative area covered by each color value within the texture map region.

58. The system of claim 55, wherein the shader (102) determines an average color value for the texture map region by accumulating color values for a plurality of point samples within the texture map region.

59. The system of claim 47, wherein at least one shading region (203) comprises a micropolygon.

60. The system of claim 47, wherein at least one shading region (203) comprises one selected from the group consisting of:
a line segment;
a triangle; and
a nonrectangular quadrilateral.

61. The system of claim 47, wherein the shader determines a color value for a shading region (203) by:
responsive to the shading region (203) corresponding to an area of the object affected by a shadow, applying a shadow factor to determine the average color value for the shading region.

62. The system of claim 47, wherein the tessellator (103):
tessellates a first portion of the object (201) into a plurality of shading regions of a first type; and
tessellates a second portion of the object into a plurality of shading regions of a second type.

63. The system of claim 62, wherein:
the shading regions (203) of the first type each have a first number of vertices; and the shading regions of the second type each have a second number of vertices;
wherein the first number is different from the second number.

64. The system of claim 47, wherein the tessellator tessellates the object into shading regions having shapes derived from at least one characteristic of the object.

65. The system of claim 64, wherein the at least one characteristic of the object (201) comprises at least one selected from, the group consisting of:
surface features;
shapes; colors; deformations; and
vertices.

66. The system of claim 47, wherein the tessellator:
tessellates a first and a second portion (201 A, 201 B) of the object, into a plurality of shading regions (203); and tessellates a transition area, adjacent to the first and the second portions, into a plurality of shading regions.

67. The system of claim 66, wherein the tessellator tessellates the transition area into a plurality of nonrectangular shading regions.

68. The system of claim 47, wherein a single shading region representation at a time is passed to the shader (102).

69. The system of claim 47, wherein a plurality of shading region representations is passed concurrently to the shader (102).

## Patentansprüche

1. Computerimplementiertes Verfahren zum Schattieren eines Objekts (201) in einem computererzeugten Bild, wobei das Verfahren Folgendes umfasst:
Tesselieren des Objekts (201) in Schattierungszonen (203), welche nicht-rechteckige Schattierungszonen mit zumindest zwei Vertices aufweisen;
Bestimmen von Farbwerten für zumindest eine Teilmenge der Schattierungszonen;
und Anwenden der bestimmten Farbwerte auf Gebiete des Objekts, welche den Schattierungszonen (203) entsprechen,
wobei das Bild eine Mehrzahl von Bildpunkten (225) umfasst,
und wobei das Anwenden der bestimmten Farbwerte für jeden aus zumindest einer Teilmenge der Bildpunkte Folgendes umfasst:
ein auf den Bildpunkt (225) Anwenden eines bestimmten Farbwertes, welcher zumindest einer Schattierungszone (203), die zumindest einen Teilbereich des Bildpunkts (225) überlappt, entspricht; und
wobei das Bestimmen eines Farbwertes für eine Schattierungszone (203) ein Übergeben einer Darstellung der Schattierungszone an einen Schattierer (102) und ein Empfangen eines Farbwertes von dem Schattierer (102) umfasst;
wobei das Übergeben einer Darstellung der Schattierungszone ein Übergeben einer Menge von die Schattierungszone (203) definierenden Vertices und/oder einer verallgemeinerten Parameterbeschreibung der Schattierungszone (203) umfasst.

2. Verfahren nach Anspruch 1, wobei die Schattierungszonen (203) polygonale Schattierungszonen aufweisen.

3. Verfahren nach Anspruch 1, wobei das Anwenden der bestimmten Farbwerte für jeden aus zumindest einer Teilmenge der Bildpunkte Folgendes umfasst:
Kombinieren von bestimmten Farbwerten, welche zumindest zwei Schattierungszonen (203), die zumindest einen Teilbereich des Bildpunktes (225) überlappen, entsprechen, um einen Farbwert für den Bildpunkt abzuleiten; und
Anwenden des abgeleiteten Farbwertes auf den Bildpunkt.

4. Verfahren nach Anspruch 3, wobei das Kombinieren der Farbwerte ein Bestimmen eines Durchschnitts der Farbwerte umfasst.

5. Verfahren nach Anspruch 3, wobei das Kombinieren der Farbwerte ein Bestimmen eines gewichteten Durchschnitts der Farbwerte umfasst.

6. Verfahren nach Anspruch 3, wobei das Kombinieren der Farbwerte ein Akkumulieren der Farbwerte umfasst.

7. Verfahren nach Anspruch 1, wobei das Bestimmen eines Farbwertes für eine Schattierungszone (203) Folgendes umfasst:
Abbilden der Schattierungszone (203) auf eine entsprechende Zone auf einer Texturkarte (104); und
Bestimmen eines Farbwertes für die Texturkartenzone.

8. Verfahren nach Anspruch 7, wobei das Bestimmen eines Farbwertes für die Texturkartenzone ein Auffinden zumindest eines Texelfarbwertes umfasst.

9. Verfahren nach Anspruch 7, wobei das Bestimmen eines Farbwertes für die Texturkartenzone ein Bestimmen eines durchschnittlichen Farbwertes für die Texturkartenzone umfasst.

10. Verfahren nach Anspruch 9, wobei das Bestimmen eines durchschnittlichen Farbwertes für die Texturkartenzone Folgendes umfasst:
in Reaktion darauf, dass es mehr als einen Farbwert für die Texturkartenzone gibt, Bestimmen eines gewichteten Farbdurchschnitts aus den Farbwerten für die Zone.

11. Verfahren nach Anspruch 10, wobei der gewichtete Farbdurchschnitt gemäß der relativen Fläche, die von jedem Farbwert in der Texturkartenzone bedeckt ist, gewichtet ist.

12. Verfahren nach Anspruch 9, wobei das Bestimmen eines durchschnittlichen Farbwertes für die Texturkartenzone ein Akkumulieren von Farbwerten für eine Mehrzahl von Punktproben in der Texturkartenzone umfasst.

13. Verfahren nach Anspruch 1, wobei zumindest eine Schattierungszone ein Mikropolygon umfasst.

14. Verfahren nach Anspruch 1, wobei zumindest eine Schattierungszone ein Liniensegment, ein Dreieck oder ein nicht-rechteckiges Polygon umfasst.

15. Verfahren nach Anspruch 1, wobei das Bestimmen eines Farbwertes für eine Schattierungszone (203) Folgendes umfasst:
in Reaktion darauf, dass die Schattierungszone (203) einem von einem Schatten betroffenen Gebiet des Objekts entspricht, Anwenden eines Schattenfaktors, um den durchschnittlichen Farbwert für die Schattierungszone (203) zu bestimmen.

16. Verfahren nach Anspruch 1, wobei das Tesselieren des Objekts (201) in eine Vielzahl von Schattierungszonen (203) Folgendes umfasst:
Tesselieren eines ersten Teilbereichs des Objekts in eine Mehrzahl von Schattierungszonen einer ersten Art; und
Tesselieren eines zweiten Teilbereichs des Objekts in eine Mehrzahl von Schattierungszonen einer zweiten Art.

17. Verfahren nach Anspruch 16, wobei
die Schattierungszonen der ersten Art jeweils eine erste Anzahl von Vertices aufweisen; und
die Schattierungszonen der zweiten Art jeweils eine zweite Anzahl von Vertices aufweisen;
wobei die erste Anzahl von der zweiten Anzahl verschieden ist.

18. Verfahren nach Anspruch 1, wobei das Tesselieren des Objekts (201) in eine Mehrzahl von Schattierungszonen (203) ein Tesselieren des Objekts (201) in Schattierungszonen, welche von zumindest einer Kenngröße des Objekts abgeleitete Formen aufweisen, umfasst.

19. Verfahren nach Anspruch 18, wobei die zumindest eine Kenngröße des Objekts zumindest Oberflächenmerkmale, Formen, Farben, Deformationen und/oder Vertices umfasst.

20. Verfahren nach Anspruch 1, wobei das Tesselieren des Objekts in eine Mehrzahl von Schattierungszonen Folgendes umfasst:
Tesselieren eines ersten und eines zweiten Teilbereichs (201A, 201B) des Objekts in eine Mehrzahl von Schattierungszonen und
Tesselieren eines Übergangsgebiets (420), welches dem ersten und dem zweiten Teilbereich benachbart ist, in eine Mehrzahl von Schattierungszonen (203).

21. Verfahren nach Anspruch 1, wobei das Tesselieren des Übergangsgebiets (420) ein Tesselieren des Übergangsgebiets in eine Mehrzahl von nicht-rechteckigen Schattierungszonen umfasst.

22. Verfahren nach Anspruch 1, wobei eine einzelne Schattierungszonendarstellung zur Zeit an den Schattierer (102) übergeben wird.

23. Verfahren nach Anspruch 1, wobei eine Mehrzahl von Schattierungszonendarstellungen gleichzeitig an den Schattierer (102) übergeben wird.

24. Computerprogrammprodukt zum Schattieren eines Objekts in einem computererzeugten Bild, wobei das Produkt Folgendes umfasst:
ein computerlesbares Medium und
einen auf dem Medium codierten Computerprogrammcode zum
Tesselieren des Objekts (201) in Schattierungszonen (203), welche nicht-rechteckige Schattierungszonen mit zumindest zwei Vertices aufweisen; Bestimmen von Farbwerten für zumindest eine Teilmenge der Schattierungszonen (203) und
Anwenden der bestimmten Farbwerte auf Gebiete des Objekts, welche den Schattierungszonen (203) entsprechen,
wobei das Bild eine Mehrzahl von Bildpunkten (225) umfasst, und wobei der Computerprogrammcode zum Anwenden der bestimmten Farbwerte einen Computerprogrammcode umfasst, um Folgendes für jeden aus zumindest einer Teilmenge der Bildpunkte durchzuführen:
auf den Bildpunkt (225) Anwenden eines bestimmten Farbwertes, welcher zumindest einer Schattierungszone, die zumindest einen Teilbereich des Bildpunkts (225) überlappt, entspricht, und
wobei der Computerprogrammcode zum Bestimmen eines Farbwertes für eine Schattierungszone (203) einen Computerprogrammcode zum Übergeben einer Darstellung der Schattierungszone an einen Schattierer (102) und Empfangen eines Farbwertes von dem Schattierer (102) umfasst;
wobei der Computerprogrammcode zum Übergeben einer Darstellung der Schattierungszone (203) einen Computerprogrammcode zum Übergeben einer Menge von die Schattierungszone (203) definierenden Vertices und/oder einer verallgemeinerten Parameterbeschreibung der Schattierungszone (203) umfasst.

25. Computerprogrammprodukt nach Anspruch 24, wobei die Schattierungszonen (203) polygonale Schattierungszonen aufweisen.

26. Computerprogrammprodukt nach Anspruch 24, wobei der Computerprogrammcode zum Anwenden der bestimmten Farbwerte einen Computerprogrammcode umfasst, um Folgendes für jeden aus zumindest einer Teilmenge der Bildpunkte (225) durchzuführen:
Kombinieren bestimmter Farbwerte, welche zumindest zwei Schattierungszonen (203), die zumindest einen Teilbereich des Bildpunktes (225) überlappen, entsprechen, um einen Farbwert für den Bildpunkt abzuleiten; und
Anwenden des abgeleiteten Farbwertes auf den Bildpunkt (225).

27. Computerprogrammprodukt nach Anspruch 26, wobei der Computerprogrammcode zum Kombinieren der Farbwerte einen Computerprogrammcode zum Bestimmen eines Durchschnitts der Farbwerte umfasst.

28. Computerprogrammprodukt nach Anspruch 26, wobei der Computerprogrammcode zum Kombinieren der Farbwerte einen Computerprogrammcode zum Bestimmen eines gewichteten Durchschnitts der Farbwerte umfasst.

29. Computerprogrammprodukt nach Anspruch 26, wobei der Computerprogrammcode zum Kombinieren der Farbwerte einen Computerprogrammcode zum Akkumulieren der Farbwerte umfasst.

30. Computerprogrammprodukt nach Anspruch 24, wobei der Computerprogrammcode zum Bestimmen eines Farbwertes für eine Schattierungszone einen Computerprogrammcode umfasst, der Folgendem dient:
Abbilden der Schattierungszone auf eine entsprechende Zone auf einer Texturkarte (104); und
Bestimmen eines Farbwertes für die Texturkartenzone.

31. Computerprogrammprodukt nach Anspruch 30, wobei der Computerprogrammcode zum Bestimmen eines Farbwertes für die Texturkartenzone einen Computerprogrammcode zum Auffinden zumindest eines Texelfarbwertes umfasst.

32. Computerprogrammprodukt nach Anspruch 30, wobei der Computerprogrammcode zum Bestimmen eines Farbwertes für die Texturkartenzone einen Computerprogrammcode zum Bestimmen eines durchschnittlichen Farbwertes für die Texturkartenzone umfasst.

33. Computerprogrammprodukt nach Anspruch 32, wobei der Computerprogrammcode zum Bestimmen eines durchschnittlichen Farbwertes für die Texturkartenzone einen Computerprogrammcode umfasst, welcher Folgendem dient:
in Reaktion darauf, dass mehr als ein Farbwert für die Texturkartenzone vorliegt, Bestimmen eines gewichteten Farbdurchschnitts aus den Farbwerten für die Zone.

34. Computerprogrammprodukt nach Anspruch 33, wobei der gewichtete Farbdurchschnitt gemäß der relativen Fläche, welche von jedem Farbwert in der Texturkartenzone bedeckt ist, gewichtet ist.

35. Computerprogrammprodukt nach Anspruch 32, wobei der Computerprogrammcode zum Bestimmen eines durchschnittlichen Farbwertes für die Texturkartenzone einen Computerprogrammcode zum Akkumulieren von Farbwerten für eine Mehrzahl von Punktproben in der Texturkartenzone umfasst.

36. Computerprogrammprodukt nach Anspruch 24, wobei zumindest eine Schattierungszone (203) ein Mikropolygon umfasst.

37. Computerprogrammprodukt nach Anspruch 24, wobei zumindest eine Schattierungszone (203) ein Liniensegment, ein Dreieck oder ein nicht-rechteckiges Polygon umfasst.

38. Computerprogrammprodukt nach Anspruch 24, wobei der Computerprogrammcode zum Bestimmen eines Farbwertes für eine Schattierungszone (203) einen Computerprogrammcode umfasst, welcher Folgendem dient:
in Reaktion darauf, dass die Schattierungszone (203) einem von einem Schatten betroffenen Gebiet des Objekts entspricht, Anwenden eines Schattenfaktors, um den durchschnittlichen Farbwert für die Schattierungszone zu bestimmen.

39. Computerprogrammprodukt nach Anspruch 24, wobei der Computerprogrammcode zum Tesselieren des Objekts in eine Mehrzahl von Schattierungszonen (203) einen Computerprogrammcode umfasst, welcher Folgendem dient:
Tesselieren eines ersten Teilbereichs des Objekts in eine Mehrzahl von Schattierungszonen einer ersten Art;
Tesselieren eines zweiten Teilbereichs des Objekts in eine Mehrzahl von Schattierungszonen einer zweiten Art.

40. Computerprogrammprodukt nach Anspruch 39, wobei
die Schattierungszonen der ersten Art jeweils eine erste Anzahl von Vertices aufweisen; und
die Schattierungszonen der zweiten Art jeweils eine zweite Anzahl von Vertices aufweisen;
wobei die erste Anzahl von der zweiten Anzahl verschieden ist.

41. Computerprogrammprodukt nach Anspruch 24, wobei der Computerprogrammcode zum Tesselieren des Objekts in eine Mehrzahl von Schattierungszonen einen Computerprogrammcode zum Tesselieren des Objekts in Schattierungszonen, welche von zumindest einer Kenngröße des Objekts abgeleitete Formen aufweisen, umfasst.

42. Computerprogrammprodukt nach Anspruch 41, wobei die zumindest eine Kenngröße des Objekts (201) zumindest Oberflächenmerkmale, Formen, Farben, Deformationen und/oder Vertices umfasst.

43. Computerprogrammprodukt nach Anspruch 24, wobei der Computerprogrammcode zum Tesselieren des Objekts (201) in eine Mehrzahl von Schattierungszonen (203) einen Computerprogrammcode umfasst, welcher Folgendem dient:
Tesselieren eines ersten und eines zweiten Teilbereichs des Objekts in eine Mehrzahl von Schattierungszonen (203); und Tesselieren eines Übergangsgebiets (420), welches dem ersten und dem zweiten Teilbereich benachbart ist, in eine Mehrzahl von Schattierungszonen (203).

44. Computerprogrammprodukt nach Anspruch 24, wobei der Computerprogrammcode zum Tesselieren des Übergangsgebiets (420) einen Computerprogrammcode zum Tesselieren des Übergangsgebiets (420) in eine Mehrzahl von nicht-rechteckigen Schattierungszonen umfasst.

45. Computerprogrammprodukt nach Anspruch 24, wobei eine einzelne Schattierungszonendarstellungen zur Zeit an den Schattierer (102) übergeben wird.

46. Computerprogrammprodukt nach Anspruch 24, wobei eine Mehrzahl von Schattierungszonendarstellungen gleichzeitig an den Schattierer (102) übergeben wird.

47. System zum Schattieren eines Objekts in einem computererzeugten Bild, wobei das System Folgendes umfasst:
einen Tesselierer (103) zum Tesselieren des Objekts (201) in Schattierungszonen (203), welche nicht-rechteckige Schattierungszonen mit zumindest zwei Vertices aufweisen;
einen Schattierer (102) zum Bestimmen eines Farbwertes für zumindest eine Teilmenge der Schattierungszonen (103); und
einen an den Schattierer gekoppelten Renderer (107) zum Anwenden der bestimmten Farbwerte auf Gebiete des Objekts (201), welche den Schattierungszonen (203) entsprechen;
wobei das Bild eine Mehrzahl von Bildpunkten (225) umfasst, und wobei der Renderer (107) für zumindest eine Teilmenge der Bildpunkte
auf den Bildpunkt (225) einen bestimmten Farbwert, welcher zumindest einer Schattierungszone (203), die zumindest einen Teilbereich des Bildpunktes überlappt, entspricht, anwendet,
wobei der Schattierer (102) eine Darstellung der zumindest einen Schattierungszone, welche eine Menge von die zumindest eine Schattierungszone definierenden Vertices und/oder eine verallgemeinerte Parameterbeschreibung der Schattierungszone (203) umfasst, empfängt.

48. System nach Anspruch 47, wobei die Schattierungzonen (203) polygonale Schattierungszonen aufweisen.

49. System nach Anspruch 47, wobei das Bild eine Mehrzahl von Bildpunkten umfasst und wobei der Renderer (107) für jeden aus zumindest einer Teilmenge der Bildpunkte bestimmte Farbwerte, welche zumindest zwei Schattierungszonen (203), die zumindest einen Teilbereich des Bildpunktes überlappen, entsprechen, kombiniert, um einen Farbwert für den Bildpunkt (225) abzuleiten; und
Anwenden des abgeleiteten Farbwertes auf den Bildpunkt (225).

50. System nach Anspruch 49, wobei der Renderer (107) die bestimmten Farbwerte durch ein Bestimmen eines Durchschnitts der Farbwerte kombiniert.

51. System nach Anspruch 49, wobei der Renderer (107) die bestimmten Farbwerte durch ein Bestimmen eines gewichteten Durchschnitts der Farbwerte kombiniert.

52. System nach Anspruch 49, wobei der Renderer (107) die bestimmten Farbwerte durch ein Akkumulieren der Farbwerte kombiniert.

53. System nach Anspruch 47, wobei der Schattierer (102) einen Farbwert für eine Schattierungszone durch Folgendes bestimmt:
Abbilden der Schattierungszone auf eine entsprechende Zone auf einer Texturkarte (104); und
Bestimmen eines Farbwertes für die Texturkartenzone.

54. System nach Anspruch 53, wobei der Schattierer einen Farbwert für die Texturkartenzone durch ein Auffinden zumindest eines Texelfarbwertes bestimmt.

55. System nach Anspruch 53, wobei der Schattierer einen Farbwert für die Texturkartenzone durch ein Bestimmen eines durchschnittlichen Farbwertes für die Texturkartenzone bestimmt.

56. System nach Anspruch 55, wobei der Schattierer einen durchschnittlichen Farbwert für die Texturkartenzone durch Folgendes bestimmt:
in Reaktion darauf, dass mehr als ein Farbwert für die Texturkartenzone vorliegt, Bestimmen eines gewichteten Farbdurchschnitts aus den Farbwerten für die Zone.

57. System nach Anspruch 56, wobei der gewichtete Farbdurchschnitt gemäß der relativen Fläche, die von jedem Farbwert in der Texturkartenzone bedeckt ist, gewichtet ist.

58. System nach Anspruch 55, wobei der Schattierer (102) einen durchschnittlichen Farbwert für die Texturkartenzone durch ein Akkumulieren von Farbwerten für eine Mehrzahl von Punktproben in der Texturkartenzone bestimmt.

59. System nach Anspruch 47, wobei zumindest eine Schattierungszone (203) ein Mikropolygon umfasst.

60. System nach Anspruch 47, wobei zumindest eine Schattierungszone (203) ein Liniensegment, ein Dreieck oder ein nicht-rechteckiges Vierseit umfasst.

61. System nach Anspruch 47, wobei der Schattierer einen Farbwert für die Schattierungszone (230) durch Folgendes bestimmt:
in Reaktion darauf, dass die Schattierungszone (203) einem von einem Schatten betroffenen Gebiet des Objekts entspricht, Anwenden eines Schattenfaktors, um den durchschnittlichen Farbwert für die Schattierungszone zu bestimmen.

62. System nach Anspruch 47, wobei der Tesselierer (103)
einen ersten Teilbereich des Objekts (201) in eine Mehrzahl von Schattierungszonen einer ersten Art tesseliert; und
einen zweiten Teilbereich des Objekts in eine Mehrzahl von Schattierungszonen einer zweiten Art tesseliert.

63. System nach Anspruch 62, wobei
die Schattierungszonen (203) der ersten Art jeweils eine erste Anzahl von Vertices aufweisen und die Schattierungszonen der zweiten Art jeweils eine zweite Anzahl von Vertices aufweisen;
wobei die erste Anzahl von der zweiten Anzahl verschieden ist.

64. System nach Anspruch 47, wobei der Tesselierer das Objekt in Schattierungszonen, welche von zumindest einer Kenngröße des Objekts abgeleitete Formen aufweisen, tesseliert.

65. System nach Anspruch 64, wobei die zumindest eine Kenngröße des Objekts (201) zumindest Oberflächenmerkmale, Formen, Farben, Deformationen und/oder Vertices umfasst.

66. System nach Anspruch 47, wobei der Tesselierer einen ersten und einen zweiten Teilbereich (201A, 201B) des Objekts in eine Mehrzahl von Schattierungszonen (203) tesseliert und ein Übergangsgebiet, welches dem ersten und dem zweiten Teilbereich benachbart ist, in eine Mehrzahl von Schattierungszonen tesseliert.

67. Verfahren nach Anspruch 66, wobei der Tesselierer das Übergangsgebiet in eine Mehrzahl von nicht-rechteckigen Schattierungszonen tesseliert.

68. System nach Anspruch 47, wobei eine einzelne Schattierungszonendarstellung zur Zeit an den Schattierer (102) übergeben wird.

69. System nach Anspruch 47, wobei eine Mehrzahl von Schattierungszonendarstellungen gleichzeitig an den Schattierer (102) übergeben wird.

## Revendications

1. Procédé, mis en oeuvre par un ordinateur, d'ombrage d'un objet (201) dans une image générée par ordinateur, consistant à :
décomposer l'objet (201) en régions d'ombrage (203), comprenant des régions d'ombrage non rectangulaires ayant au moins deux sommets ;
déterminer des valeurs de couleur pour au moins un sous-ensemble de régions d'ombrage; et
appliquer les valeurs de couleur déterminées aux aires de l'objet correspondant aux régions d'ombrage (203),
dans lequel l'image comprend une pluralité de pixels (225),
et dans lequel l'application des valeurs de couleur déterminées consiste, pour chacun d'au moins un sous-ensemble des pixels, à :
appliquer, au pixel (225), une valeur de couleur déterminée correspondant à au moins une région d'ombrage (203) recouvrant au moins une partie du pixel (225) ; et
dans lequel la détermination d'une valeur de couleur pour une région d'ombrage (203) consiste à transférer une représentation de la région d'ombrage à un nuanceur (102), et à recevoir une valeur de couleur du nuanceur (102) ;
dans lequel le transfert d'une représentation de la région d'ombrage consiste à transférer un ensemble de sommets définissant la région d'ombrage (203) et/ou
une description paramétrique généralisée de la région d'ombrage (203).

2. Procédé selon la revendication 1, dans lequel les régions d'ombrage (203) comprennent des régions d'ombrage polygonales.

3. Procédé selon la revendication 1,
dans lequel l'application des valeurs de couleur déterminées consiste, pour chacun d'au moins un sous-ensemble des pixels, à :
combiner les valeurs de couleur déterminées correspondant à au moins deux régions d'ombrage (203) recouvrant au moins une partie du pixel (225), pour déduire une valeur de couleur pour le pixel ; et
appliquer la valeur de couleur déduite au pixel.

4. Procédé selon la revendication 3, dans lequel la combinaison des valeurs de couleur consiste à déterminer une moyenne des valeurs de couleur.

5. Procédé selon la revendication 3, dans lequel la combinaison des valeurs de couleur consiste à déterminer une moyenne pondérée des valeurs de couleur.

6. Procédé selon la revendication 3, dans lequel la combinaison des valeurs de couleur consiste à accumuler les valeurs de couleur.

7. Procédé selon la revendication 1, dans lequel la détermination d'une valeur de couleur pour une région d'ombrage (203) consiste à :
mapper la région d'ombrage (203) vers une région correspondante sur une carte de texture (104) ; et
déterminer une valeur de couleur pour la région de carte de texture.

8. Procédé selon la revendication 7, dans lequel la détermination d'une valeur de couleur pour la région de carte de texture consiste à récupérer au moins une valeur de couleur de décomposition.

9. Procédé selon la revendication 7, dans lequel la détermination d'une valeur de couleur pour la région de carte de texture consiste à déterminer une valeur de couleur moyenne pour la région de carte de texture.

10. Procédé selon la revendication 9, dans lequel la détermination d'une valeur de couleur moyenne pour la région de carte de texture consiste à :
en réponse au fait qu'il existe plusieurs valeurs de couleur pour la région de carte de texture, déterminer une couleur moyenne pondérée à partir des valeurs de couleur pour la région.

11. Procédé selon la revendication 10, dans lequel la couleur moyenne pondérée est pondérée en fonction de l'aire relative couverte par chaque valeur de couleur dans la région de carte de texture.

12. Procédé selon la revendication 9, dans lequel la détermination d'une valeur de couleur moyenne pour la région de carte de texture consiste à accumuler des valeurs de couleur pour une pluralité d'échantillons de points dans la région de carte de texture.

13. Procédé selon la revendication 1, dans lequel au moins une région d'ombrage comprend un micropolygone.

14. Procédé selon la revendication 1, dans lequel au moins une région d'ombrage comprend l'un sélectionné dans le groupe consistant en :
un segment de droite ;
un triangle ; et
un polygone non rectangulaire.

15. Procédé selon la revendication 1, dans lequel la détermination d'une valeur de couleur pour une région d'ombrage (203) consiste à :
en réponse au fait que la région d'ombrage (203) correspond à une aire de l'objet affectée par une ombre, appliquer un facteur d'ombre pour déterminer la valeur de couleur moyenne pour la région d'ombrage (203).

16. Procédé selon la revendication 1, dans lequel la décomposition de l'objet (201) en une pluralité de régions d'ombrage (203) consiste à :
décomposer une première partie de l'objet en une pluralité de régions d'ombrage d'un premier type ; et
décomposer une deuxième partie de l'objet en une pluralité de régions d'ombrage d'un deuxième type.

17. Procédé selon la revendication 16, dans lequel :
les régions d'ombrage du premier type ont chacune un premier nombre de sommets ; et
les régions d'ombrage du deuxième type ont chacune un deuxième nombre de sommets ;
dans lequel le premier nombre est différent du deuxième nombre.

18. Procédé selon la revendication 1, dans lequel la décomposition de l'objet (201) en une pluralité de régions d'ombrage (203) consiste à décomposer l'objet en des régions d'ombrage ayant des formes déduites d'au moins une caractéristique de l'objet.

19. Procédé selon la revendication 18, dans lequel ladite au moins une caractéristique de l'objet comprend au moins l'un sélectionné dans le groupe consistant en :
des caractéristiques de surface ;
des formes ;
des couleurs ;
des déformations ; et
des sommets.

20. Procédé selon la revendication 1, dans lequel la décomposition de l'objet en une pluralité de régions d'ombrage consiste à :
décomposer des première et deuxième parties (201A, 201B) de l'objet en une pluralité de régions d'ombrage ; et ;
décomposer une aire de transition (420), adjacente aux première et deuxième parties, en une pluralité de régions d'ombrage (203).

21. Procédé selon la revendication 1, dans lequel la décomposition de l'aire de transition (420) consiste à décomposer l'aire de transition en une pluralité de régions d'ombrage non rectangulaires.

22. Procédé selon la revendication 1, dans lequel une seule représentation de région d'ombrage à la fois est transférée au nuanceur (102).

23. Procédé selon la revendication 1, dans lequel une pluralité de représentations de région d'ombrage sont transférées simultanément au nuanceur (102).

24. Produit-programme d'ordinateur pour ombrer un objet dans une image générée par ordinateur, comprenant :
un support pouvant être lu par un ordinateur ; et
un code de programme d'ordinateur, encodé sur le support, pour :
décomposer l'objet (201) en régions d'ombrage (203), comprenant des régions d'ombrage non rectangulaires ayant au moins deux sommets ;
déterminer des valeurs de couleur pour au moins un sous-ensemble de régions d'ombrage (203) ; et
appliquer les valeurs de couleur déterminées aux aires de l'objet correspondant aux régions d'ombrage (203),
dans lequel l'image comprend une pluralité de pixels (225), et dans lequel le code de programme d'ordinateur pour appliquer les valeurs de couleur déterminées comprend un code de programme d'ordinateur pour, pour chacun d'au moins un sous-ensemble des pixels :
appliquer, au pixel (225), une valeur de couleur déterminée correspondant à au moins une région d'ombrage couvrant au moins une partie du pixel (225) ; et
dans lequel le code de programme d'ordinateur pour déterminer une valeur de couleur pour une région d'ombrage (203) comprend un code de programme d'ordinateur pour transférer une représentation de la région d'ombrage à un nuanceur (102), et recevoir une valeur de couleur du nuanceur (102) ;
dans lequel le code de programme d'ordinateur pour transférer une représentation de la région d'ombrage (203) comprend un code de programme d'ordinateur pour transférer un ensemble de sommets définissant la région d'ombrage (203) et/ou
une description paramétrique généralisée de la région d'ombrage (203).

25. Produit-programme d'ordinateur selon la revendication 24, dans lequel les régions d'ombrage (203) comprennent des régions d'ombrage polygonales.

26. Produit-programme d'ordinateur selon la revendication 24, dans lequel le code de programme d'ordinateur pour appliquer les valeurs de couleur déterminées comprend un code de programme d'ordinateur pour, pour chacun d'au moins un sous-ensemble de pixels (225) :
combiner les valeurs de couleur déterminées correspondant à au moins deux régions d'ombrage (203) couvrant au moins une partie du pixel (225), pour déduire une valeur de couleur pour le pixel ; et
appliquer la valeur de couleur déduite au pixel (225).

27. Produit-programme d'ordinateur selon la revendication 26, dans lequel le code de programme d'ordinateur pour combiner les valeurs de couleur comprend un code de programme d'ordinateur pour déterminer une moyenne des valeurs de couleur.

28. Produit-programme d'ordinateur selon la revendication 26, dans lequel le code de programme d'ordinateur pour combiner les valeurs de couleur comprend un code de programme d'ordinateur pour déterminer une moyenne pondérée des valeurs de couleur.

29. Produit-programme d'ordinateur selon la revendication 26, dans lequel le code de programme d'ordinateur pour combiner les valeurs de couleur comprend un code de programme d'ordinateur pour accumuler les valeurs de couleur.

30. Produit-programme d'ordinateur selon la revendication 24, dans lequel le code de programme d'ordinateur pour déterminer une valeur de couleur pour une région d'ombrage comprend un code de programme d'ordinateur pour :
mapper la région d'ombrage vers une région correspondante sur une carte de texture (104) ; et
déterminer une valeur de couleur pour la région de carte de texture.

31. Produit-programme d'ordinateur selon la revendication 30, dans lequel le code de programme d'ordinateur pour déterminer une valeur de couleur pour la région de carte de texture comprend un code de programme d'ordinateur pour récupérer au moins une valeur de couleur de décomposition.

32. Produit-programme d'ordinateur selon la revendication 30, dans lequel le code de programme d'ordinateur pour déterminer une valeur de couleur pour la région de carte de texture comprend un code de programme d'ordinateur pour déterminer une valeur de couleur moyenne pour la région de carte de texture.

33. Produit-programme d'ordinateur selon la revendication 32, dans lequel le code de programme d'ordinateur pour déterminer une valeur de couleur moyenne pour la région de carte de texture comprend un code de programme d'ordinateur pour :
en réponse au fait qu'il existe plusieurs valeurs de couleur pour la région de carte de texture, déterminer une couleur moyenne pondérée à partir des valeurs de couleur pour la région.

34. Produit-programme d'ordinateur selon la revendication 33, dans lequel la couleur moyenne pondérée est pondérée en fonction de l'aire relative couverte par chaque valeur de couleur dans la région de carte de texture.

35. Produit-programme d'ordinateur selon la revendication 32, dans lequel le code de programme d'ordinateur pour déterminer une valeur de couleur moyenne pour la région de carte de texture comprend un code de programme d'ordinateur pour accumuler des valeurs de couleur pour une pluralité d'échantillons de points dans la région de carte de texture.

36. Produit-programme d'ordinateur selon la revendication 24, dans lequel au moins une région d'ombrage (203) comprend un micropolygone.

37. Produit-programme d'ordinateur selon la revendication 24, dans lequel au moins une région d'ombrage (203) comprend l'un sélectionné dans le groupe consistant en
: un segment de droite ;
un triangle ; et
un polygone non rectangulaire.

38. Produit-programme d'ordinateur selon la revendication 24, dans lequel le code de programme d'ordinateur pour déterminer une valeur de couleur pour une région d'ombrage (203) comprend un code de programme d'ordinateur pour :
en réponse au fait que la région d'ombrage (203) correspond à une aire de l'objet affectée par une ombre, appliquer un facteur d'ombre pour déterminer la valeur de couleur moyenne pour la région d'ombrage.

39. Produit-programme d'ordinateur selon la revendication 24, dans lequel le code de programme d'ordinateur pour décomposer l'objet en une pluralité de régions d'ombrage (203) comprend un code de programme d'ordinateur pour :
décomposer une première partie de l'objet en une pluralité de régions d'ombrage d'un premier type ; et
décomposer une deuxième partie de l'objet en une pluralité de régions d'ombrage d'un deuxième type.

40. Produit-programme d'ordinateur selon la revendication 39, dans lequel :
les régions d'ombrage du premier type ont chacune un premier nombre de sommets ; et
les régions d'ombrage du deuxième type ont chacune un deuxième nombre de sommets ;
dans lequel le premier nombre est différent du deuxième nombre.

41. Produit-programme d'ordinateur selon la revendication 24, dans lequel le code de programme d'ordinateur pour décomposer l'objet en une pluralité de régions d'ombrage comprend un code de programme d'ordinateur pour décomposer l'objet en régions d'ombrage ayant des formes déduites d'au moins une caractéristique de l'objet.

42. Produit-programme d'ordinateur selon la revendication 41, dans lequel ladite au moins une caractéristique de l'objet (201) comprend au moins l'un sélectionné dans le groupe consistant en :
des caractéristiques de surface ;
des formes ;
des couleurs ;
des déformations ; et
des sommets.

43. Produit-programme d'ordinateur selon la revendication 24, dans lequel le code de programme d'ordinateur pour décomposer l'objet (201) en une pluralité de régions d'ombrage (203) comprend un code de programme d'ordinateur pour :
décomposer des première et deuxième parties de l'objet en une pluralité de régions d'ombrage (203) ; et
décomposer une aire de transition (420), adjacente aux première et deuxième parties, en une pluralité de régions d'ombrage (203).

44. Produit-programme d'ordinateur selon la revendication 24, dans lequel le code de programme d'ordinateur pour décomposer l'aire de transition (420) comprend un code de programme d'ordinateur pour décomposer l'aire de transition (420) en une pluralité de régions d'ombrage non rectangulaires.

45. Produit-programme d'ordinateur selon la revendication 24, dans lequel une seule représentation de région d'ombrage à la fois est transférée au nuanceur (102).

46. Produit-programme d'ordinateur selon la revendication 24, dans lequel une pluralité de représentations de région d'ombrage sont transférées simultanément au nuanceur (102).

47. Système pour ombrer un objet dans une image générée par ordinateur, comprenant :
un dispositif de décomposition (103), pour décomposer l'objet (201) en des régions d'ombrage (203), comprenant des régions d'ombrage non rectangulaires comportant au moins deux sommets ;
un nuanceur (102) pour déterminer une valeur de couleur pour au moins un sous-ensemble de régions d'ombrage (203) ; et
un dispositif de rendu (107), couplé au nuanceur, pour appliquer les valeurs de couleur déterminées aux aires de l'objet (201) correspondant aux régions d'ombrage (203) ;
dans lequel l'image comprend une pluralité de pixels (225), et dans lequel le dispositif de rendu (107), pour chacun d'au moins un sous-ensemble de pixels
applique, au pixel (225), une valeur de couleur déterminée correspondant à au moins une région d'ombrage (203) couvrant au moins une partie du pixel,
dans lequel le nuanceur (102) reçoit une représentation de ladite au moins une région d'ombrage comprenant un ensemble de sommets définissant ladite au moins une région d'ombrage et/ou une description paramétrique généralisée de la région d'ombrage (203).

48. Système selon la revendication 47, dans lequel les régions d'ombrage (203) comprennent des régions d'ombrage polygonales.

49. Système selon la revendication 47, dans lequel l'image comprend une pluralité de pixels, et dans lequel le dispositif de rendu (107), pour chacun d'au moins un sous-ensemble des pixels :
combine les valeurs de couleur déterminées correspondant à au moins deux régions d'ombrage (203) couvrant au moins une partie du pixel, pour déduire une valeur de couleur pour le pixel (225) ; et
applique la valeur de couleur déduite au pixel (225).

50. Système selon la revendication 49, dans lequel le dispositif de rendu (107) combine les valeurs de couleur déterminées en déterminant une moyenne des valeurs de couleur.

51. Système selon la revendication 49, dans lequel le dispositif de rendu (107) combine les valeurs de couleur déterminées en déterminant une moyenne pondérée des valeurs de couleur.

52. Système selon la revendication 49, dans lequel le dispositif de rendu (107) combine les valeurs de couleur déterminées en accumulant les valeurs de couleur.

53. Système selon la revendication 47, dans lequel le nuanceur (102) détermine une valeur de couleur pour une région d'ombrage en :
mappant la région d'ombrage vers une région correspondante sur une carte de texture (104) ; et
déterminant une valeur de couleur pour la région de carte de texture.

54. Système selon la revendication 53, dans lequel le nuanceur détermine une valeur de couleur pour la région de carte de texture en récupérant au moins une valeur de couleur de décomposition.

55. Système selon la revendication 53, dans lequel le nuanceur détermine une valeur de couleur pour la région de carte de texture en déterminant une valeur de couleur moyenne pour la région de carte de texture.

56. Système selon la revendication 55, dans lequel le nuanceur détermine une valeur de couleur moyenne pour la région de carte de texture en :
en réponse au fait qu'il existe plusieurs valeurs de couleur pour la région de carte de texture, déterminant une couleur moyenne pondérée à partir des valeurs de couleur pour la région.

57. Système selon la revendication 56, dans lequel la couleur moyenne pondérée est pondérée en fonction de l'aire relative couverte par chaque valeur de couleur dans la région de carte de texture.

58. Système selon la revendication 55, dans lequel le nuanceur (102) détermine une valeur de couleur moyenne pour la région de carte de texture en accumulant des valeurs de couleur pour une pluralité d'échantillons de points dans la région de carte de texture.

59. Système selon la revendication 47, dans lequel au moins une région d'ombrage (203) comprend un micropolygone.

60. Système selon la revendication 47, dans lequel au moins une région d'ombrage (203) comprend l'un sélectionné dans le groupe consistant en :
un segment de droite ;
un triangle ; et
un quadrilatère non rectangulaire.

61. Système selon la revendication 47, dans lequel le nuanceur détermine une valeur de couleur pour une région d'ombrage (203) en :
en réponse au fait que la région d'ombrage (203) correspond à une aire de l'objet affectée par une ombre, appliquant un facteur d'ombre pour déterminer la valeur de couleur moyenne pour la région d'ombrage.

62. Système selon la revendication 47, dans lequel le dispositif de décomposition (103) :
décompose une première partie de l'objet (201) en une pluralité de régions d'ombrage d'un premier type ; et
décompose une deuxième partie de l'objet en une pluralité de régions d'ombrage d'un deuxième type.

63. Système selon la revendication 62, dans lequel :
les régions d'ombrage (203) du premier type ont chacune un premier nombre de sommets ; et
les régions d'ombrage du deuxième type ont chacune un deuxième nombre de sommets ;
dans lequel le premier nombre est différent du deuxième nombre.

64. Système selon la revendication 47, dans lequel le dispositif de décomposition décompose l'objet en régions d'ombrage ayant des formes déduites d'au moins une caractéristique de l'objet.

65. Système selon la revendication 64, dans lequel ladite au moins une caractéristique de l'objet (201) comprend au moins l'un sélectionné dans le groupe consistant en :
des caractéristiques de surface ;
des formes ;
des couleurs ;
des déformations ; et
des sommets.

66. Système selon la revendication 47, dans lequel le dispositif de décomposition :
décompose des première et deuxième parties (201A, 201B) de l'objet en une pluralité de régions d'ombrage (203) ; et
décompose une aire de transition, adjacente aux première et deuxième parties, en une pluralité de régions d'ombrage.

67. Système selon la revendication 66, dans lequel le dispositif de décomposition décompose l'aire de transition en une pluralité de régions d'ombrage non rectangulaires.

68. Système selon la revendication 47, dans lequel une seule représentation de région d'ombrage à la fois est transférée au nuanceur (102).

69. Système selon la revendication 47, dans lequel une pluralité de représentations de région d'ombrage sont transférées simultanément au nuanceur (102).
